**Europäisches Patentamt**

**European Patent Office**

**Office européen des brevets**

(19)

(11) Veröffentlichungsnummer : **0 533 978 B1**

(12)

# EUROPÄISCHE PATENTSCHRIFT

(45) Veröffentlichungstag der Patentschrift :
**31.05.95 Patentblatt 95/22**

(51) Int. Cl.⁶ : **H02M 7/5387**

(21) Anmeldenummer : **91116450.7**

(22) Anmeldetag : **26.09.91**

(54) **Verfahren und Vorrichtung zum Ansteuern eines Pulswechselrichters.**

(43) Veröffentlichungstag der Anmeldung :
**31.03.93 Patentblatt 93/13**

(45) Bekanntmachung des Hinweises auf die
Patenterteilung :
**31.05.95 Patentblatt 95/22**

(84) Benannte Vertragsstaaten :
**CH DE FR GB IT LI SE**

(56) Entgegenhaltungen :
**EP-A- 0 371 442**
**DE-A- 3 131 344**

(73) Patentinhaber : **SIEMENS
AKTIENGESELLSCHAFT
Wittelsbacherplatz 2
D-80333 München (DE)**

(72) Erfinder : **Braun, Michael, Dr. Ing.
Wolfsleite 40
W-8522 Herzogenaurach (DE)**

## Beschreibung

Die Erfindung betrifft ein Verfahren zum Ansteuern der Schaltelemente eines Wechselrichters mit einer gepulsten Ausgangsgröße, insbesondere ein Verfahren mit den im Oberbegriff des Anspruchs 1 angegebenen Merkmalen. Die Erfindung betrifft ferner eine Vorrichtung zum Bilden der Ansteuersignale für die Schaltelemente eines derartigen Pulswechselrichters mit den im Oberbegriff des Anspruchs 25 bzw. 27 angegebenen Merkmalen.

Wird ein Pulswechselrichter von einer im wesentlichen konstanten Eingangsgleichspannung gespeist, so erzeugt er an den einzelnen Phasen Spannungspulse, deren Höhe nach Abklingen transienter Vorgänge durch die vorgegebene Eingangsgleichspannung bestimmt ist. Daher ist jede Phasenspannung praktisch zu jedem Zeitpunkt durch die Eingangsgleichspannung und den Schaltzustand der auf den Phasenausgang arbeitenden Schalter bestimmt und entsprechend den möglichen Kombinationen der Schaltzustände aller Schalter kann das System aller Phasenspannungen nur bestimmte Zustände annehmen.

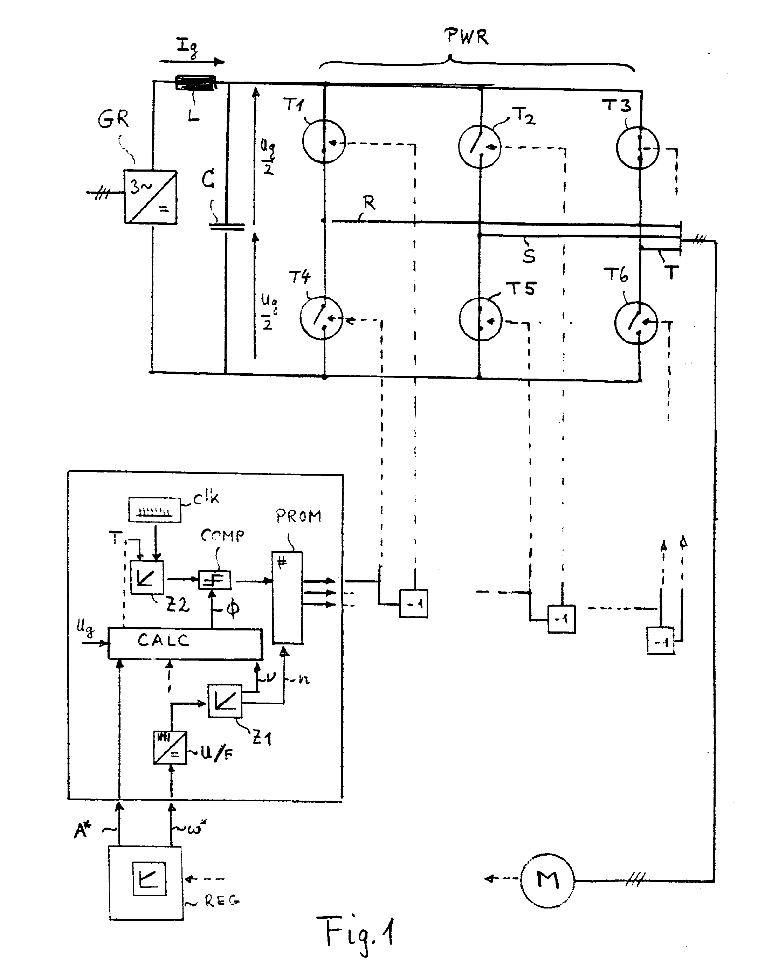

In Fig. 1 ist der Leistungsteil eines Pulswechselrichters PWR dargestellt, bei dem die Phase R an die Mitte eines Brückenzweig-Paares angeschlossen ist, dessen Schaltelemente T1 und T4 die Phase R abwechselnd an den positiven oder negativen Pol der Eingangsgleichspannung anschließen. Diese Eingangsgleichspannung kann z.B. von einem Gleichrichter GR geliefert werden, der über eine Glättungsdrossel L einen zur Aufrechterhaltung der konstanten Eingangsgleichspannung Ug entsprechend groß bemessenen Kondensator C speist. In diesem Fall sorgt eine (in Fig. 1 nicht dargestellte) Verriegelung dafür, daß die beiden Schaltelemente T1 und T4 niemals gleichzeitig geschlossen sind, um einen Kurzschluß der Eingangsgleichspannung und damit eine Zerstörung der Ventile zu vermeiden. Andererseits enthalten die Schaltelemente in der Regel ein abschaltbares Ventil für die Eingangsgleichspannung und eine dazu antiparallele Diode, die bei Sperren dieser Ventile den Stromkreis für einen in der Phase R fließenden Laststrom schließt. Das Brückenzweigpaar T1, T4 besitzt also nur die beiden Schaltzustände R+ und R-, bei denen die Phase R entweder über T1 an den positiven Pol oder über T4 an den negativen Pol angeschlossen ist.

Entsprechendes gilt für die Phasen S und T, die jeweils beim Schaltzustand S+ bzw. T+ über die Schaltelemente T2 bzw. T3 an den positiven Pol oder durch die Schaltzustände S-, T- über die Schaltelemente T5 und T6 des jeweiligen Brückenzweigpaares an den negativen Pol der Eingangsgleichspannung angeschlossen sind. Für alle drei Brückenzweigpaare ergeben sich daher $2^3 = 8$ Schaltzustände.

Der Schaltzustand R+, S+ und T+, der mit (+++) bezeichnet ist, führt dazu, daß alle drei Phasenspannungen auf positiver Eingangsgleichspannung liegen. Bezeichnet man mit UR', US', UT' die Phasenspannungen, mit UN = (UR' + US' + UT')/3 den Nullpunkt des Phasenspannungssystems und mit UR = UR' - UN, US = US' - UN und UT = UT' - UN die auf diesen Nullpunkt bezogenen Phasenspannungen, so gehört zum Schaltzustand (+++) der "Nullvektor" $\underline{U}0 = 0$, der das Phasenspannungssystem mit UR = US = UT = 0 beschreibt. Der gleiche Zustandsvektor $\underline{U}0$ kann aber auch durch den Schaltzustand (---) erreicht werden, bei dem die drei Brückenzweigpaare T1, T4 und T2, T5 und T3, T6 den Schaltzustand R-, S-, T- besitzen.

Somit verbleiben sechs Schaltzustände und sechs entsprechende Spannungszustände, die von den Phasenspannungen eingenommen werden können. Ordnet man den jeweils zum Zeitpunkt t vorliegenden Istwerten UR(t), US(t), UT(t) der Phasenspannungen eine komplexe Zahl zu:

$$\underline{U}(t) = \frac{2}{3} \cdot (UR(t) + US(t).e^{j.2\pi/3} + UT(t).e^{j.4\pi/3}), \quad (1)$$

so erhält man durch den Realteil $U_\alpha(t)$ und den Imaginärteil $U_\beta(t)$ dieser Zahl zwei orthogonale, raumfeste Komponenten eines Vektors, aus dem durch die inverse Zuordnung

UR(t) = Realteil $(\underline{U}(t))$,
US(t) = Realteil $(\underline{U}(t) . e^{-j.2\pi/3})$
UT(t) = Realteil $(\underline{U}(t) . e^{-j.4\pi/3})$

die Istwerte der Phasenspannungen folgen.

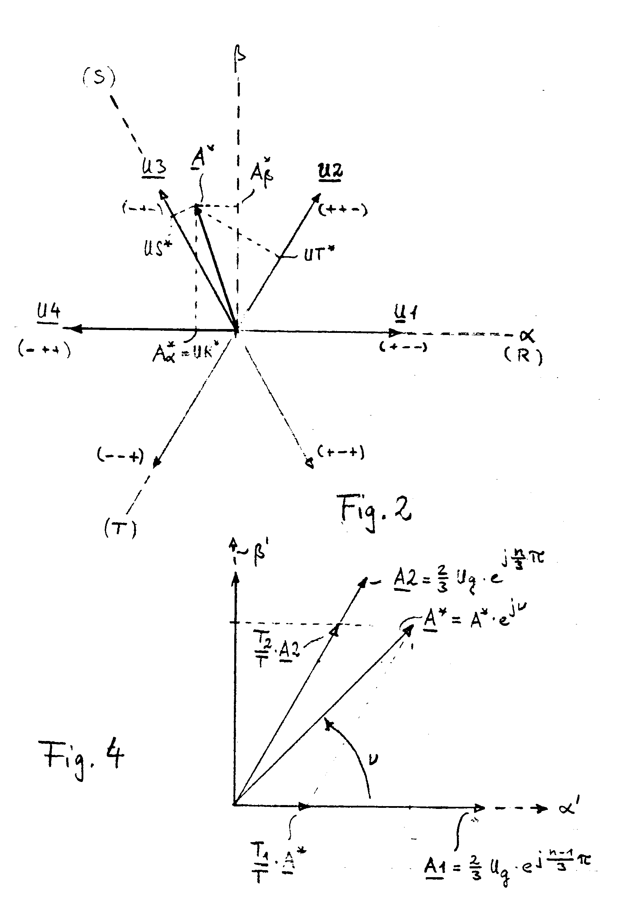

Da aber die Ausgangsspannungen des Pulswechselrichters - bis auf transiente Übergänge - nur die Werte $\pm Ug/2$ annehmen können, gilt - außer für den Nullzustand - stets $|\underline{U}(t)| = \frac{2}{3}U_g$, wobei die Phasenlage durch einen der sechs verbleibenden Schaltzustände bestimmt ist. Man kann also das System der Phasenspannungen des Pulswechselrichters zu jedem Zeitpunkt durch einen momentanen Zustandsvektor $\underline{U}(t)$ beschreiben, der jeweils dem gerade angesteuerten Schaltzustand entspricht und mit einem der in Fig. 2 dargestellten diskreten Spannungsvektoren $\underline{U}0,...\underline{U}6$ zusammenfällt.

Diese Beschreibung der momentanen Phasenspannungen durch einen momentanen Spannungsvektor, der durch die momentan angesteuerten Schaltzustände der Schaltelemente und die vorgegebene Eingangsgleichspannung gegeben ist, läßt sich auch auf stromeinprägende Pulswechselrichter übertragen. In diesem Fall ist im Leistungsteil die Drossel L entsprechend groß bemessen, um den Eingangsgleichstrom Ig im wesentlichen konstant zu halten, während der Kondensator C überflüssig ist oder nur als Oberwellenfilter dient. In diesem Fall sind durch eine entsprechende Steuerung die Schaltzustände (+++) und (---) auszuschließen, um stets einen geschlossenen Stromkreis für den Zwischenkreisstrom zu ermöglichen. Sieht man von Kommutierungsvorgängen ab, bei denen in einer Brückenhälfte zwei Schalter geschlossen sind, so sind für jede Brückenhälfte drei Schaltzustände zugelassen, bei denen jeweils ein Schalter den vollen Gleichstrom führt. Außerhalb der Kommutierungszeiten verbleiben dem Pulswechselrichter $3^2 = 9$ mögliche Schaltzustände, wobei in drei Fällen mindestens in einem Brückenzweigpaar beide Schalter geschlossen sind und somit einen Bypass für den Gleichstrom liefern. Außer diesem Nullzustand verbleiben also ebenfalls nur sechs mögliche Schaltzustände. Werden jetzt die gepulsten Phasenströme durch einen entsprechenden Ist-Stromvektor $\underline{I}(t)$ beschrieben, so kann auch dieser momentane Zustandsvektor gemäß Fig. 2 nur einen der entsprechenden diskreten Zustandsvektoren annehmen.

Die Erfindung wird im folgenden nur für die gegenwärtig wirtschaftlich interessanteren Spannungs-Pulswechselrichter beschrieben, jedoch läßt sich die Erfindung auch auf stromeinprägende Pulswechselrichter übertragen, indem die Rollen von Strom und Spannung sowie von Kapazität und Induktivität vertauscht werden. An die Stelle des Flusses (Integral der Spannung bzw. der EMK) tritt dann der Vektor der Ladungsverteilung (Integral des Stromvektors), der als "komplexe Ladung" bezeichnet werden kann.

Auch vorgegebene Sollwerte UR*, US*, UT* können gemäß den Beziehungen (1) und (2) einem entsprechenden Sollvektor $\underline{A}^*$ zugeordnet werden (es gilt dabei UR* + US* + UT* = 0). Aus Fig. 2 ergibt sich, daß diese Sollwerte nur dann vom Wechselrichter erzeugt werden können, wenn dieser Sollvektor $\underline{A}^*$ mit einem der diskreten Zustandsvektoren $\underline{U}0,...\underline{U}6$ zusammenfällt. Man kann aber erreichen, daß für eine vorgegebene Dauer T wenigstens die Mittelwerte der Phasenspannungen die entsprechenden Sollwerte annehmen, d.h. es gilt:

$$\text{UR*} = \frac{1}{T} \int_o^T \text{UR}(t).dt, \quad \text{US*} = \frac{1}{T} \int_o^T \text{US}(t).dt, \quad \text{UT*} = \frac{1}{T} \int_o^T \text{UT}(t).dt.$$

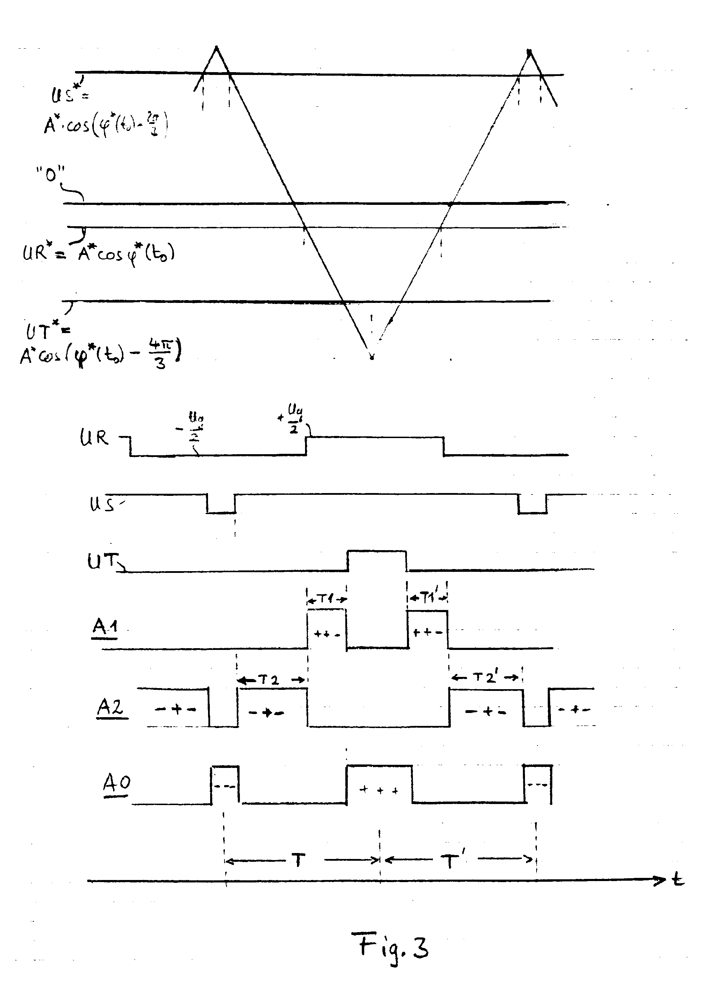

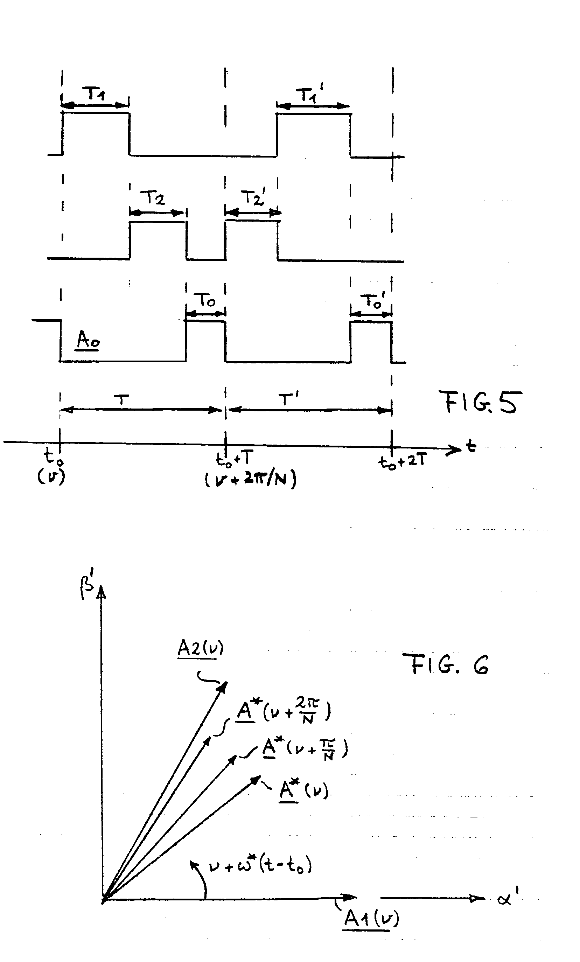

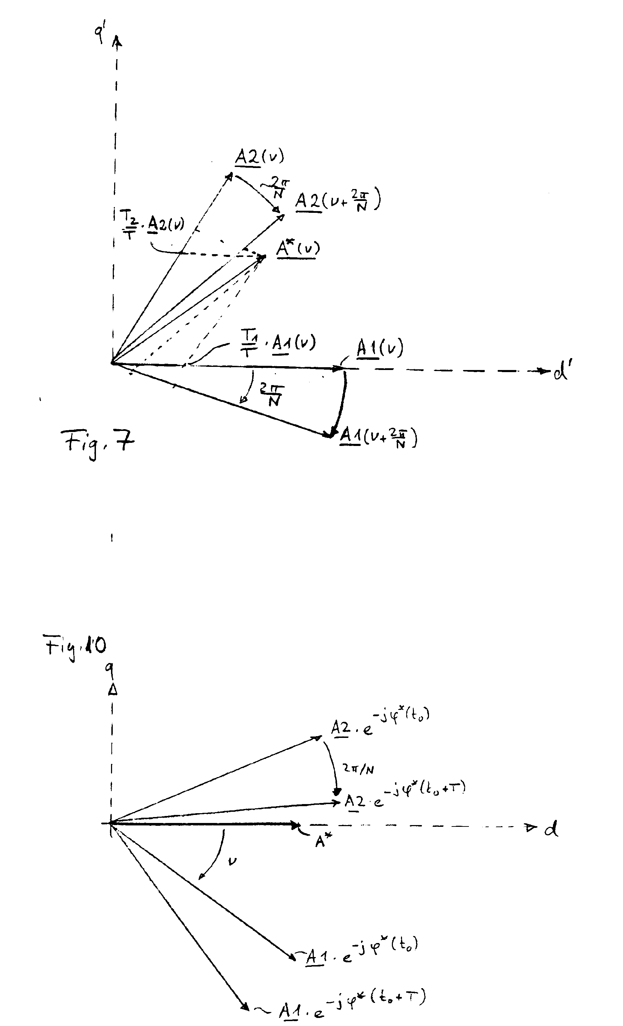

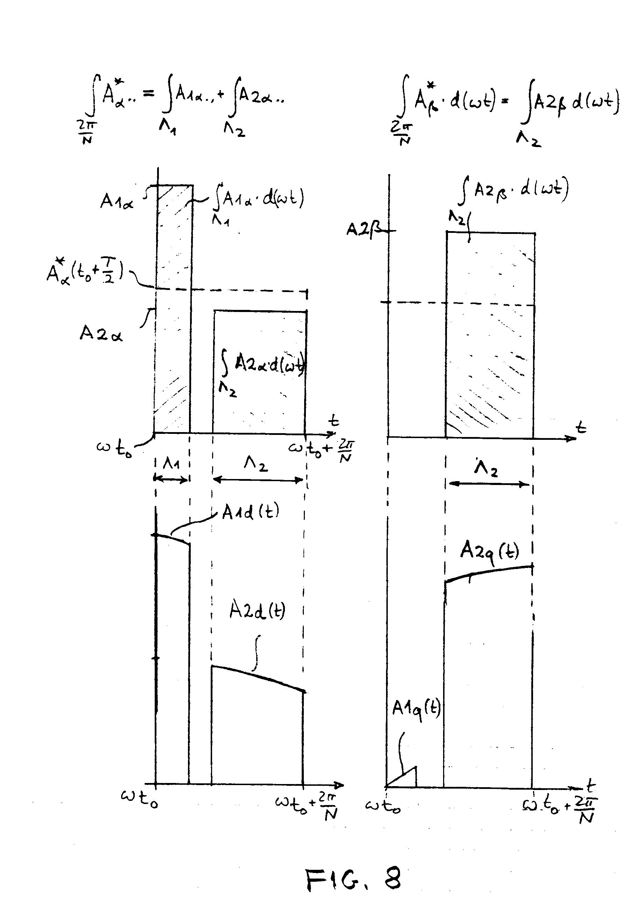

Dazu werden die entsprechenden Spannungssollwerte nach dem sogenannten "Unterschwingungsverfahren" mit einer Tastspannung moduliert, wie dies in Fig. 3 dargestellt ist.

Der Schnittpunkt der Phasen-Sollspannung mit der Tastspannung ergibt jeweils die Zeitpunkte, bei denen die Schaltelemente des dieser Phasenspannung zugeordneten Brückenzweigpaares umgeschaltet werden. Gemäß den Beziehungen (1) ist den Phasenspannungen zu jedem Zeitpunkt t also ein momentaner Zustandsvektor $\underline{U}(t)$ zugeordnet:

$$\begin{aligned}
\underline{U}(t) &= \underline{A}1... \text{ im Intervall } T1,\ T1' \\
\underline{U}(t) &= \underline{A}2... \text{ im Intervall } T2,\ T2' \\
U(t) &= \underline{A}0... \text{ sonst.}
\end{aligned} \quad \left. \right\} \quad (2)$$

Dabei sind $\underline{A}1$ und $\underline{A}2$ jeweils die diskreten Zustandsvektoren, die den in den Intervallen T1 und T2 angesteuerten Schaltkombinationen entsprechen. T1 und T2 sind die "Verweildauern", mit denen der momentane Zustandsvektor in diesem Zustand verweilt. Für die in Fig. 3 dargestellten Spannungssollwerte, die zu einem Winkel $\varphi^* \approx 110°$ gehören, ist der im Schaltzyklus T angesteuerte "aktive" Zustandsvektor $\underline{A}1$ der Vektor $\underline{U}2$ der Fig. 2, während der "aktive" Vektor $\underline{A}2$ gleich $\underline{U}3$ ist.

Statt nacheinander jeden Schaltzeitpunkt aus den Schnittpunkten der Sollspannungen und der Tastspannung zu ermitteln, können gemäß der deutschen Patentschrift 31 31 344 auch jeweils zu Beginn eines Ansteuerzyklus bereits alle Schaltzeitpunkte vorausberechnet werden. Dabei wird zunächst das Zeitintervall T für einen Ansteuerzyklus festgelegt. Die Sollwerte der Phasenspannungen bestimmen die momentane Lage und Richtung des Sollvektors, der genauso gut auch durch einen Betragssollwert A*(t) und Winkelsollwert $\varphi^*$ (oder $\omega^*.t$) vorgegeben werden kann. Bereits zum Zeitpunkt t0 zu Beginn des Ansteuerzyklus können durch die Beziehung

$$\begin{aligned}
(n-1)\frac{\pi}{3} &\leq \varphi^*(t0) < n \cdot \pi/3 \\
\text{d.h.: } \varphi^*(t_0) &= (n-1).\pi/3 + \nu; \quad 0 \leq \nu < \pi/3
\end{aligned} \quad \left. \right\} \quad (3)$$

zwei "aktive Zustandsvektoren"

$$\underline{A}1 = \underline{U}n = \frac{2}{3} Ug \cdot e^{j(n-1)\cdot\pi/3}$$

$$\underline{A}2 = \underline{U}(n+1) = \frac{2}{3} Ug \cdot e^{jn\cdot\pi/3} \qquad \Bigg\} \qquad (3')$$

ausgewählt werden, wobei n eine ganze positive Zahl ist. Zusammen mit dem Nullvektor $\underline{A}0 = \underline{U}0$ sind somit die in einem Ansteuerzyklus zu aktivierenden diskreten Zustandsvektoren bestimmt. Zusätzlich muß noch die Reihenfolge festgelegt werden, in der diese Vektoren angesteuert werden. In Analogie zu Fig. 3 kann jeweils für zwei aufeinander folgende Ansteuerzyklen die Reihenfolge $\underline{A}1$, $\underline{A}2$, $\underline{A}0$ bzw. $\underline{A}2$, $\underline{A}1$, $\underline{A}0$ gewählt werden.

Da bei dieser Reihenfolge also zum Zeitpunkt t0 (Zyklusbeginn) der Zustandsvektor $\underline{A}1$ angesteuert wird, nach der entsprechenden Verweildauer T1 dieses Zustandes auf den Zustand A2 übergegangen und schließlich zum Zeitpunkt t0 + (T1 + T2) der Zustandsvektor $\underline{A}0$ angesteuert werden soll, sind nur noch zwei Freiheitsgrade, nämlich die beiden Verweildauern T1 und T2 zu bestimmen. Dazu dient die Bestimmungsgleichung

$$\underline{A}^*(t0) = \frac{1}{T} \cdot \int_0^T \underline{U}(t)\cdot dt = \frac{T1}{T}\cdot \underline{A}1 + \frac{T2}{T} \cdot \underline{A}2 \qquad (4)$$

Die Verweildauern T1 und T2 werden also zu Gewichtsfaktoren für eine vektorielle Addition der aktiven Zustandsvektoren $\underline{A}1$ und $\underline{A}2$.

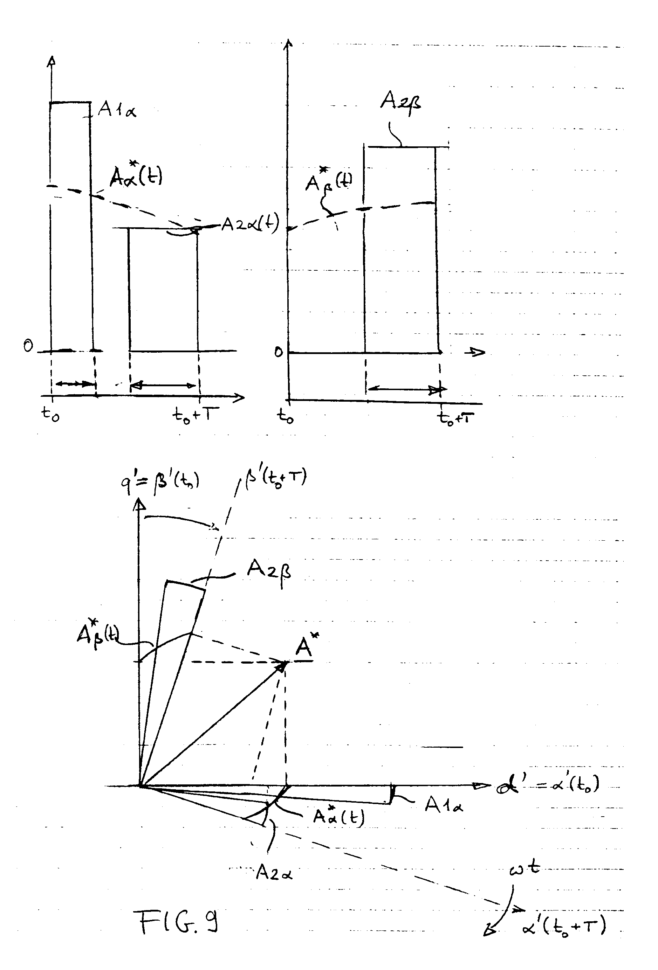

Diese vektorielle Addition ist in Fig. 4 dargestellt. Dabei ist die $\alpha$-Achse der Fig. 2 um den Winkel $(n-1)\cdot\pi/3$ gedreht, um mit der Richtung des Vektors $\underline{A}1$ zusammenzufallen. Der Sollvektor $\underline{A}^*$ besitzt in diesem gedrehten Koordinatensystem den Winkel $v = \varphi^*-(n-1)\cdot\pi/3$ und wird vektoriell in den Vektor $(T1/T)\cdot\underline{A}1$ und den Vektor $(T2/T)\cdot\underline{A}1.\exp(j\cdot\pi/3)$ zerlegt. Dies führt zu den beiden Bestimmungsgleichungen

$$T1 = T.\sin(60° - v).\sqrt{3} \cdot A^*/Ug \qquad (4')$$

$$T2 = T \cdot \sin v \cdot \sqrt{3} \cdot A^*/Ug.$$

Dadurch wird also die Bestimmungsgleichung

$$A^* \cdot e^{jv} = \frac{1}{T}\int_0^T \underline{U}(t)dt = \overline{\underline{U}(t)} \qquad (4'')$$

gelöst und bewirkt, daß im Intervall T der Mittelwert $\overline{\underline{U}}(t)$ des momentanen Spannungsvektors $\underline{U}(t)$ gleich dem zu Beginn des Intervalls vorliegenden Sollvektor ist.

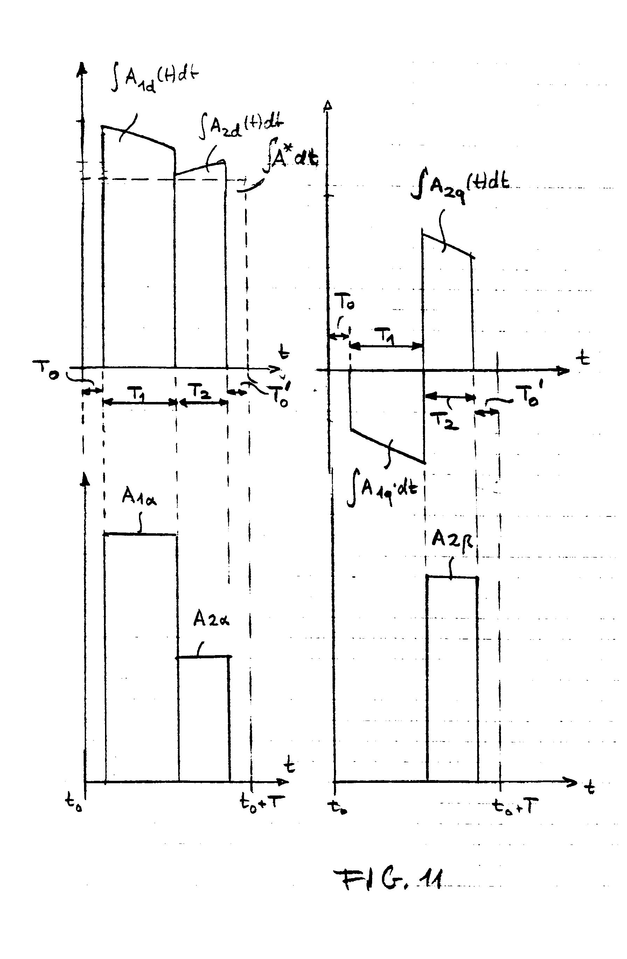

Fig. 5 zeigt das hierbei entstehende Pulsmuster.

Die für diese "Raumzeiger-Modulation" vorgesehenen Bauteile sind in Fig. 1 dargestellt:

Einer Maschinenregelung REG werden in diesem Fall der Betragssollwert A* und ein Frequenzsollwert $\omega^*$ entnommen. Ein Integrator (Zähler Z1) bildet einen digitalen Winkel-Sollwert $\varphi^*$, dessen niedrigwertige Bits den Winkel $v$ darstellen und zur Bildung der Winkelfunktionen des Winkels $v$ einem Rechner CALC zugeführt sind, während die höherwertigen Bits die Zahl (n-1) darstellen und einem Decoder (PROM) eingegeben werden. Dieser Decoder wählt nach Gleichung (3) die aktiven Zustandsvektoren aus und stellt die Ansteuersignale zur Verfügung, um gemäß der vorgegebenen Reihenfolge die aktiven Zustände nacheinander anzusteuern. Der Rechner CALC bildet die Zeitintervalle T1 und T1 + T2, die im Komparator COMP mit einem im Takt T periodischen Laufzeitsignal verglichen werden, um jeweils den im Decoder gespeicherten Zyklus weiterzuschalten. Dieses Laufzeitsignal wird von einem Zähler Z2 für ein Taktsignal clk gebildet.

Es ist auch bekannt, daß die Bedingungsgleichung $\underline{U}(t)=\underline{A}^*(t0)$ durch eine andere Auswahl aktiver Vektoren angesteuert werden kann. Ergeben sich z.B. für den Vektor $\underline{U}2$ sehr kurze Ansteuerzeiten, so kann dessen Verweilzeit verlängert werden, indem die Verweilzeit des anderen aktiven Vektors $\underline{U}3$ verkürzt und als zusätzlicher aktiver Vektor $\underline{U}4$ angesteuert wird. Derartige zusätzliche Freiheitsgrade können auch bei der Erfindung eingeführt werden.

Es sind auch andere Steuerverfahren bekannt, die in Abhängigkeit von vorgegebenen Istwerten jeweils

EP 0 533 978 B1

Verweildauern vorausberechnen, die hinsichtlich Wirkungsgrad, Oberschwingungsgehalt oder anderer Größen optimiert sind. Dadurch entstehen optimierte Pulsmuster, deren Amplituden und Phasen aber schnell verstellt werden müssen. Ein Echtzeitbetrieb, bei dem außerdem das vom Pulsbetrieb verursachte Rauschen in den Istwerten und andere Einflüsse stören, verursacht Probleme, die bisher noch nicht zufriedenstellend gelöst sind.

Daher werden gegenwärtig Pulswechselrichter praktisch nur nach dem Unterschwingungsverfahren oder der Raumzeigermodulation gesteuert, wobei aber die Genauigkeit der eingestellten Spannung durch andere Faktoren begrenzt ist.

Verhältnismäßig gute Ergebnisse erhält man, wenn die Abtastfrequenz um den Faktor 10 bis 20 oder höher über der Grundfrequenz des Sollwertes liegt. Die in dieser Betrachtung vernachlässigten transienten Übergänge führen aber bei so hohen Schaltfrequenzen zu Nichtlinearitäten, die z.B. durch unterschiedliche Schwellspannungen und Kommutierungszeiten in den Schaltelementen und andere Bauteilparameter verursacht sein können und zu deren Beseitigung bereits verschiedene Korrekturen in der Ansteuerlogik vorgeschlagen wurden.

Bei kleineren Frequenzverhältnissen treten Unterschwingungen auf, die durch eine aufwendige Synchronisierung der Ansteuerzyklen auf die Grundschwingung vermieden werden sollen. Aber auch dann erscheinen Korrekturen erforderlich, um eine Linearität zwischen der erzeugten Grundschwingungsamplitude und dem Sollwert sicherzustellen. Außerdem wird es erforderlich, das Frequenzverhältnis während des Betriebes zu ändern, was ebenfalls nicht ohne weiteres möglich ist.

Aufgabe der Erfindung ist es, wenigstens Amplitudenfehler und Unterschwingungen, wie sie bei den beschriebenen Verfahren auftreten, durch ein genaueres Modulationsverfahren zu verringern. Dies schließt nicht aus, daß auch bei der Erfindung noch derartige Korrekturen, z.B. zur Berücksichtigung der unterschiedlichen Bauteilparameter, vorteilhaft sein können, da durch eine einzige Verbesserung im Modulationsverfahren z.B. nicht auch alle Fehlerquellen, die Hardware-bedingt sind, gleichzeitig optimal korrigiert werden können. Vielmehr sollen mit der Erfindung bei einer Mittelwert-Bildung, die zur Berücksichtigung veränderlicher Sollwerte erforderlich ist, bisher begangene Fehler beseitigt werden.

Diese Aufgabe wird gelöst durch ein Verfahren mit den Merkmalen des Anspruchs 1 und eine Vorrichtung mit den Merkmalen des Anspruchs 25.

Vorteilhafte Weiterbildungen der Erfindung sind in den Unteransprüchen gekennzeichnet und werden anhand von einem bevorzugten Ausführungsbeispiel und weiteren Figuren erläutert.

Es zeigen:

| | |
|---|---|
| Fig. 1 | die bereits bekannte Schaltung zur Raumzeigermodulation bei einem Pulswechselrichter, deren Hardware auch nach der Erfindung benutzt wird, |
| Fig. 2 | die Schaltzustände mit den zugeordneten, diskreten Zustandsvektoren des Pulswechselrichters und die Auswahl der aktiven Zustandsvektoren bei einem vorgegebenen Sollvektor, |
| Fig. 3 | das bekannte Unterschwingungsverfahren für konstant angenommene Sollwerte, |
| Fig. 4 | die vektorielle Zerlegung eines konstanten Zustandsvektors in die mit den Verweilzeiten gewichteten aktiven Zustandsvektoren, |
| Fig. 5 | das bei der bekannten Raumzeigermodulation entstehende Pulsmuster, |
| Fig. 6 und 7 | einen mit seiner Grundfrequenz rotierenden Sollvektor in Bezug auf die ausgewählten aktiven Vektoren, |
| Fig. 8 und 9 | geometrische Darstellungen zweier möglicher Bedingungen, |
| Fig. 10 | den Sollvektor in einem synchron rotierenden Bezugssystem, |
| Fig. 11 | die geometrische Darstellung der erfindungsgemäßen Bedingungsgleichung, |
| Fig. 12 | eine Zerlegung des Sollvektors in mehrere aktive Vektoren, |
| Fig. 13 - 18 | Unterschiedliche Zyklusfolgen und Verweilzeiten, |
| Fig. 19 | ein Blockschaltbild des Rechenteils der Vorrichtung nach Fig. 1, |
| Fig. 20 | ein Simulationsmodell der Last, |
| Fig. 21 und 22 | den Verlauf von Spannung und Strom in einem ruhenden und einem rotierenden Koordinatensystem. |

Die Erfindung geht dabei von der Erkenntnis aus, daß sowohl beim Unterschwingungsverfahren wie bei der Raumzeigermodulation berücksichtigt werden muß, daß der Sollwert während des Schaltzyklus nicht konstant ist, sondern sich zumindest näherungsweise mit einer dem Sollwert vorgegebenen Grundfrequenz ändert.

Während für Frequenzen $\omega^* \approx 0$ vorzugsweise eine asynchrone Modulation mit vorgegebener Zyklusdauer T vorgenommen wird, gelangt man für höhere Frequenzen zu einer einfacheren Beschreibung der Verhältnisse, wenn man die Zeitabhängigkeit des Sollwertes $\underline{A}^*(t)$ durch eine Winkelabhängigkeit ersetzt. Zum Zeitpunkt t0

5

(Zyklusbeginn) am Beginn des Zeitintervalls T (Zyklusdauer) besitzt der Sollvektor $\underline{A}^*(t)$ die Amplitude $A^*$ die Frequenz $\omega 0$, und den Winkel $\varphi^*(t0)$, so daß dem Zeitpunkt $t0 + T$ des Zyklusendes der Winkel $\varphi^*(t0) + \omega 0.T$ zugeordnet werden kann. Das Zeitintervall T kann also durch eine Zahl $N = 2\cdot\pi/\omega 0.T$ vorgegeben werden. Das Zeitintervall T entspricht dann der Zeit, die der Sollvektor zum Durchlaufen des Winkelbereichs $2\cdot\pi/N$ benötigt. Dieser Winkelbereich muß kein ganzzahliger Bruchteil einer vollen Umdrehung sein, sondern kann beliebig vorgegeben werden, so daß die Ansteuerzyklen nicht auf die Grundschwingung des Sollwertes synchronisiert ist.

Dabei entspricht $N = 6$ dem Fall, daß der Sollvektor jeweils nach einem Zyklus in einen neuen Sektor mit neuen aktiven Vektoren nach Fig. 2 eintritt. Daher wird in der Regel $N \geq 6$ gewählt.

Aus den vorgegebenen Werten $A^*$ und $\varphi^*(to)$ kann man also durch gleichmäßige Rotation mit der Frequenz $\omega 0$ im Zeitintervall T den Sollvektor

$$\underline{A}^*(t) = A^*.\exp(\varphi^*(to) + \omega_o.(t - t_o))$$

bilden.

Wie bereits bei der Raumzeigermodulation erläutert, entspricht der Lage $\varphi^*(t0)$ des Sollvektors zu Beginn des Zeitintervalls eine Zahl n, die die Auswahl der beiden aktiven Zustandsvektoren $\underline{A}1$ und $\underline{A}2$ bestimmt. Es ist daher vorteilhaft, gemäß Beziehung (3) den Winkelbereich in Abhängigkeit von der Lage

$$\varphi^*(t_o) = (n - 1).\frac{\pi}{3} + v \quad (5)$$

des Sollvektors zu Beginn des Zeitintervalls vorzugeben. Legt man für den diskreten Zustandsvektoren der Fig. 3 nicht die $\alpha,\beta$-Achsen, sondern um den Winkel $\varphi^*(to) - v$ gedrehte Achsen $\alpha',\beta'$ zugrunde, so ist die Lage des Winkelbereichs durch den Startwinkel $v$ (d.h. die Lage des Sollvektors zu Beginn des Zeitintervalles) gegeben. Der Endwinkel beträgt dann $v + 2\cdot\pi/N$. Man gelangt zu der in Fig. 6 gezeigten Darstellung des Sollvektors, bei dem der Sollvektor zum Zeitpunkt $t0$ durch $\underline{A}^*(v)$, zum Zeitpunkt $t0 + T$ durch $\underline{A}^*(v + 2\pi/N)$ dargestellt ist.

Man erreicht offensichtlich eine erste Verbesserung der Bedingungsgleichung (4), wenn man davon ausgeht, daß der Mittelwert $\overline{\underline{U}}$ des durch das alternierende Ansteuern dieser aktiven Zustandsvektoren gebildeten Zustandsvektors einen Sollvektor mit der Amplitude $A^*$ und dem über das Intervall T gemittelten Winkel des Vektors $\underline{A}^*(t)$ darstellen soll. Diese verbesserte Bedingungsgleichung lautet also

$$\left. \begin{aligned} A^*.e^{j\overline{\varphi}^*} &= \frac{1}{T}\int_T \underline{U}(t)\cdot d\tau = \overline{\underline{U}} \\ \text{mit:} \quad \overline{\varphi}^* &= \frac{1}{T}\int_T d\varphi^*(t) + \varphi^*(t_o) = (n-1)\cdot\frac{\pi}{3} + v + \frac{\pi}{N} \end{aligned} \right\} \quad (6)$$

In der Bedingungsgleichung (4) ist also der Anfangswert $\varphi^*(to)$ durch den mittleren Winkel $\overline{\varphi}^*$ ersetzt, während das Integral unverändert bleibt und den im ruhenden $\alpha,\beta$-System gemittelten momentanen Zustandsvektor $\underline{U}(t)$ gemäß der Beziehung (2) darstellt.

Unter Einführung der Normierung $r = \sqrt{3}.A^*/Ug$ und der Teil-Winkelbereiche $\Lambda 1 = \omega o.T1$ und $\Lambda 2 = \omega o.T2$ ergibt sich daher wegen $\omega 0.T = 2\pi/N$:

$$A^*e^{j(v+\pi/N)} = \frac{1}{T}\int_{T_1}\underline{A}_1\cdot dt + \frac{1}{T}\int_{T_2}\underline{A}_2\cdot dt = \frac{\Lambda_1}{2\pi/N}\cdot\underline{A}_1 + \frac{\Lambda_2}{2\pi/N}\cdot\underline{A}_2 ,$$

$$\text{d.h.:} \quad r\cdot\frac{U_g}{\sqrt{3}}\cos(v+\frac{\pi}{N}) = \frac{1}{2\pi/N}\cdot\int_{\Lambda_1}\frac{2}{3}U_g\cdot d(\omega_o t) + \frac{1}{2\pi/N}\cdot\int_{\Lambda_2}\frac{1}{3}U_g\cdot d(\omega_o t)$$

$$r\cdot\frac{U_g}{\sqrt{3}}\sin(v+\frac{\pi}{N}) = \frac{1}{2\pi/N}\cdot\int_{\Lambda_2}\frac{\sqrt{3}}{2}U_g\cdot d(\omega_o t).$$

Die daraus folgenden Lösungen:

$$\Lambda_1 = \frac{2T\pi}{N}.\cos\left(\frac{\pi}{6} + v + \frac{\pi}{N}\right)$$

$$\Lambda_2 = \frac{2T\pi}{N}.\cos\left(\frac{\pi}{2} - v - \frac{\pi}{N}\right)$$

beschreiben Verweildauern $T_2 = \Lambda1/\omega_o$, $T_2 = \Lambda2/\omega_o$, die sicherstellen, daß in jedem Intervall T der mittlere Spannungsvektor $\overline{U}$, der die raumfesten Orthogonalkomponenten $\overline{U}_\alpha$ (t) und $\overline{U}_\beta$ (t) besitzt, mit dem mittleren Sollspannungsvektor übereinstimmt; jedoch kann z.B. die Grundschwingung dieses Vektors $\overline{U}$(t) gegenüber einer durch A*. $e^{j\cdot\omega_o\cdot t}$ gegebenen Soll-Grundschwingung abweichen.

Die Erfindung sieht daher vor, die Bedingungsgleichung (4) der Raumzeigermodulation durch eine Bedingungsgleichung zu ersetzen, die die Verweildauern derart festlegt, daß der momentane Ist-Spannungsvektor (also die gepulste Ausgangsgröße des Wechselrichters) in jedem Teilintervall den Beitrag zu einer Schwingung vorgegebener Frequenz leistet, der durch die Sollwerte vorgegeben ist.

Nach der Theorie der Fourier-Zerlegung ist der Beitrag des Sollvektors $\underline{A}$*(t) zur Schwingung $e^{j\cdot\omega\cdot t}$ im Zeitintervall T durch

$$\frac{2}{T} \cdot \int_T A^*(t) \cdot e^{-j\omega t} \cdot d(\omega t)$$

gegeben, wobei der Realteil mit der Grundschwingung in Phase ist und der Imaginärteil einen Anteil mit der Phasenverschiebung $\pi/2$ angibt. Die gleiche Beziehung gilt auch für den diskontinuierlich veränderlichen momentanen Zustandsvektor $\underline{U}$(t), so daß gemäß der Erfindung die Bedingungsgleichung

$$\int_T (\underline{A}^*(t) - \underline{U}(t)) \cdot e^{-j\cdot\omega\cdot t} \, dt = 0 \quad (7)$$

erfüllt wird.

Diese Bedingungsgleichung bestimmt somit jeweils zwei Freiheitsgrade in jedem Ansteuerzyklus. Besitzt der Zyklus nur zwei Freiheitsgrade, wie dies in Fig. 5 für die bekannte "Raumzeigermodulation" dargestellt ist, so sind damit die Phasenlagen aller Schaltimpulse im Zyklus festgelegt. Andererseits können in die bekannte Raumzeigermodulation beliebig viele zusätzliche Freiheitsgrade eingebaut werden, wenn man die Zahl der aktiven Zustandsvektoren erhöht (z.B. $\underline{U}0$ durch $\underline{U}1$ und $\underline{U}4$ ersetzt) oder insbesondere eine andere Reihenfolge der nacheinander anzusteuernden aktiven Vektoren vorgibt, bei der wenigstens ein aktiver Vektor (z.B. der Nullvektor) mehrfach angesteuert wird. In diesem Fall werden noch weitere Gleichungen verwendet, so daß ein Gleichungssystem entsteht, das alle Einschaltdauern festlegt. Gemäß der Erfindung werden die Einschaltdauern also so berechnet, daß mindestens die Gleichung (7) erfüllt ist.

Zur Durchführung des erfindungsgemäßen Verfahrens kann eine Vorrichtung benutzt werden, deren Hardware bereits aus der Raumzeigermodulation bekannt ist (Fig. 1). An den Eingängen werden Sollwertsignale eingegeben, die für jeden Zeitpunkt einen momentanen Sollvektor festlegen. Geeignete Mittel wählen aus den möglichen Schaltzuständen der Schaltelemente diejenigen Schaltzustände aus, die innerhalb eines Zyklus vorgegebener Dauer in einer vorgegebenen Reihenfolge nacheinander angesteuert werden sollen. Ferner werden durch entsprechende Mittel die Ansteuersignale für die den ausgewählten Schaltzuständen entsprechenden und in der vorgegebenen Reihenfolge nacheinander anzusteuernden Schaltelemente gebildet. Ein Rechenteil berechnet dabei die Verweildauern, innerhalb derer ein angesteuerter Schaltzustand beibehalten wird, bevor auf den im Zyklus folgenden Schaltzustand umgeschaltet wird.

Dadurch wird also das Zeitintervall T für den Ansteuerzyklus festgelegt. Der Sollvektor $\underline{A}$*(t), dessen Amplitude A*(t) und Richtung *(t) durch die Sollwerte vorgegeben ist, bestimmt dann die Auswahl und die Reihenfolge der während des Zyklus nacheinander anzusteuernden Schaltzustände, d.h. z.B. die Zuordnung der aktiven Vektoren $\underline{A}0$, $\underline{A}1$, $\underline{A}2$ zu den diskreten, den Schaltzuständen zugeordneten Vektoren $\underline{U}_o,...,\underline{U}_6$ (Fig.2) und deren Reihenfolge (z.B. $\underline{A}2$, $\underline{A}1$, $\underline{A}0$, $\underline{A}1$, $\underline{A}2$). Außerdem werden für die Verweilzeiten für die den aktiven Vektoren zugeordneten Schaltzustände errechnet. Die einem Schaltzustand entsprechenden Schaltelemente werden jeweils solange angesteuert, bis die errechnete Verweildauer verstrichen ist und der nächste Schaltzustand angesteuert wird.

Im Unterschied zu der bekannten Raumzeiger-Modulation werden die Verweildauern aber aus verbesserten Bedingungsgleichungen errechnet. In diesen verbesserten Bedingungsgleichungen kann insbesondere ein über das Zeitintervall gebildetes vektorielles Integral, dessen Integrand als Funktion der Verweildauern den Differenzvektor $\underline{A}$*(t) - $\underline{U}$(t) aus dem Sollvektor und dem momentanen Zustandsvektor in einem mit der vorgegebenen Frequenz rotierenden Koordinantensystem darstellt, vorgegeben werden.

Insbesondere kann für dieses Integral der Wert Null gesetzt werden. Die Hardware wird daher vorteilhaft nach folgendem Programm gesteuert:

a) Jedem möglichen Zustand der Schaltelemente ist ein diskreter Zustandsvektor ($\underline{U}1$=(++-), $\underline{U}2$,...$\underline{U}0$, Fig. 2) zugeordnet, der die gepulste Ausgangsgröße (insbesondere also das Spannungssystem UR, US, UT bzw. den Spannungsvektor $\underline{U}$(t) eines spannungseinprägenden Pulswechselrichters) als Funktion des Schaltzustandes beschreibt.

b) Den für den Zyklus ausgewählten Schaltzuständen der Schaltelemente werden die entsprechenden diskreten Vektoren als aktive Vektoren zugeordnet (vgl. Beziehung (3)).

c) Entsprechend der Reihenfolge (z.B. $\underline{A}2, \underline{A}1, \underline{A}0, \underline{A}1, \underline{A}2$), in der die Schaltzustände angesteuert werden sollen, werden den aktiven Vektoren Variable zur Vorausberechnung der jeweiligen Verweildauer des anzusteuernden Schaltzustandes zugeordnet, z.B. die Variablen

$$\psi_{11} = \omega o \cdot T1 \text{ und } \psi_{12} = \omega o \cdot T_1'$$

für die beiden Einschaltzeiten des Schaltzustandes (++-) (aktiven Vektors $\underline{A}1$) und die Variablen $\psi_{21} = \omega o \cdot T_2$ und $\psi_{22} = \omega o \cdot T_2'$ für $\underline{A}2$, wobei für den Nullzustand $\underline{A}0$ die Variable $To = T - (T1 + T1' + T2 + T2')$ unabhängig sein kann und dann die Zyklusdauer vorgibt oder aus einer anderweitig vorgegebenen Zyklusdauer T als abhängige Variable bestimmt wird.

d) Jedem Zeitpunkt innerhalb des Zeitintervalls wird ein als Funktion dieser Variablen aus den aktiven Vektoren gebildeter momentaner Zustandsvektor $\underline{U}(t)$, Beziehung (2), gebildet, der somit eine zum Sollvektor $A^* \cdot \exp(j \cdot \varphi^*(t))$ parallele Komponente und eine dazu senkrechte Komponente besitzt, die durch Realteil und Imaginärteil von $\underline{U}(t) \cdot \exp(-j \cdot \varphi^*(t))$ gegeben sind.

e) Die Verweilzeiten werden als mathematische Lösungen von Bedingungsgleichungen gebildet, wobei eine der Bedingungsgleichungen die mittlere parallele Komponente des momentanen Zustandsvektors gleich der mittleren Sollvektoramplitude, die andere Bedingungsgleichung aber die mittlere senkrechte Komponente gleich dem Wert Null setzt. Die Mittelung entspricht dabei dem Integral über das Zeitintervall Null.

Bei dieser letzten Variante ist angenommen, daß das Ausgangsspannungssystem so gesteuert werden soll, daß ihm die Grundschwingung $\omega$ durch die Frequenz $\omega_o$ des Sollvektors eingeprägt werden soll. Darüber hinaus können aber auch andere Schwingungen eingeprägt werden. Z.B. kann ein Zusatz-Vektor $A'^* \exp(j \cdot \omega' \cdot t)$ mit $\omega' = 3 \cdot \omega o$ vorgegeben werden. Dann können zwei Bedingungsgleichungen aufgestellt werden, die die vektorielle Differenz $A'^* \exp(j \cdot \omega' \cdot t) - \underline{U}(t)$ im mit $\omega'$ rotierenden Koordinatensystem gleich Null setzen, so daß das Ausgangsspannungssystem die Dritte Harmonische enthält.

Im folgenden wird aber nur die Grundfrequenz betrachtet, so daß

$$\varphi^*(t) = \varphi^*(to) + \omega_o(t - to) = \omega \cdot t.$$

Dabei ist die Phasenverschiebung $\Delta\varphi^* = \varphi^*(t) = \omega \cdot t$ zwischen dem Sollvektor und der einzuprägenden Grundschwingung gleich Null gesetzt.

Vorteilhaft werden in jedem Zeitintervall der Null-Schaltzustand, dem der Wert Null des Zustandsvektors zugeordnet ist, und mindestens zwei weitere Schaltzustände, denen jeweils ein konstanter Wert ungleich Null zugeordnet ist, ausgewählt und ihre Reihenfolge wird so bestimmt, daß wenigstens zwei dieser ausgewählten Schaltzustände mehrfach angesteuert werden.

Im weiteren wird nur der einfache Fall betrachtet, daß zum Zeitpunkt t0 aus der Lage des Sollvektors die beiden benachbarten diskreten Vektoren als aktive Vektoren $\underline{A}1$ und $\underline{A}2$ bestimmt werden, also aus der in Fig. 2 gezeigten Anzahl der diskreten Vektoren, die jeweils einem Schaltzustand zugeordnet sind und sich aus der Anzahl und Anordnung der Schaltelemente des Wechselrichters ergeben, keine weiteren Vektoren als aktive Vektoren ausgewählt und daher auch keine weiteren Schaltzustände in einem Zyklus angesteuert werden. Allerdings soll jeweils in einem Zeitintervall bzw. Winkelbereich außer diesen beiden benachbarten diskreten Vektoren auch wenigstens ein Schaltzustand, der einem Nullvektor entspricht, ausgewählt und angesteuert werden.

Es ist also in einem Zyklus zugelassen, daß der momentane Zustandsvektor $\underline{U}(t)$ mindestens zwei der entsprechenden Zustandsvektoren $\underline{A}0$, $\underline{A}1$ und $\underline{A}2$ mehrfach annimmt.

Man gelangt zu einer einfacheren Darstellung der Verhältnisse, wenn man das $\alpha'$-$\beta'$-Koordinatensystem der Fig. 4 oder 6 mit der Frequenz $\omega = \omega 0$ rotieren läßt, was einer Koordinatendrehung um den Winkel $\omega \cdot (t - to)$ bzw. einer Drehung der Fig.2 um den Winkel

$$\mu(t) = (n - 1) \cdot \frac{\pi}{3} + \omega'(t - to)$$

entspricht. Es ergibt sich eine d'-Achse, die im $\alpha,\beta$-System durch $e^{j\mu(t)}$ gegeben ist. Da für Zeitpunkte $t > to$ gesetzt ist:

$$\underline{A}^*(t) \cdot e^{-j\mu(t)} = A^* \cdot e^{j(v + \omega \cdot (t - t_o) + (n - 1) \cdot \frac{\pi}{3})},$$

lautet unter Verwendung der erwähnten Normierungen der transformierter Sollvektor:

$$\underline{A}^*(t) \cdot e^{-j\mu(t)} = A^* \cdot e^{j \cdot v} = T \cdot Ug \cdot \sqrt{3} \cdot e^{j \cdot v}.$$

Dagegen werden die aktiven Vektoren

$$\underline{A}_1 = \frac{2}{3} Ug \cdot e^{j \cdot (n - 1) \cdot \pi/3},$$

$$\underline{A}_2 = \frac{2}{3} Ug \cdot e^{j \cdot n \cdot \pi/3}$$

zu den transformierten aktiven Vektoren:

$$\underline{A}_1 \cdot e^{- j\mu(t)} = \frac{2}{3} Ug \cdot e^{- j\omega \cdot (t - t_o)} \, ,$$

$$\underline{A}_2 \cdot e^{- j\mu(t)} = \frac{2}{3} Ug \cdot e^{j(\frac{\pi}{3} - \omega \cdot (t - t_o))}$$

mit den Anfangsstellungen A1($\nu$), A2($\nu$) und den Endstellungen A1($\nu$+2$\cdot\pi$/N) und A2($\nu$+2$\cdot\pi$/N), wie in Fig. 7 gezeigt ist.

Zu den Zeitpunkten $t_o$, $t_o + \omega.(t_o + \frac{\pi}{N})$ und $t_o + \omega.(t_o + \frac{2\pi}{N})$ ergeben sich nach der Bedingungsgleichung (6) Verweilzeiten, deren aus Fig. 4 folgende Konstruktion in Fig. 7 ebenfalls gezeigt ist. Diese Verweilzeiten, d.h. die Projektionen des Sollvektors $\underline{A}^*(\nu)$ auf die Vektoren $\underline{A}1(\nu)$, $\underline{A}1(\nu + \frac{\pi}{N})$, $\underline{A}1(\nu + \frac{2\nu}{N})$ bzw. $\underline{A}2(\nu)$, $\underline{A}2(\nu + \frac{\pi}{N})$ und $\underline{A}2(\nu + \frac{2\pi}{N})$ ändern sich nicht linear mit der Zeit, so daß die Gewichte T1/T und T2/T des Zustandsvektors $\underline{A}1(\nu + \frac{\pi}{N})$ bzw. $\underline{A}2(\nu + \frac{\pi}{N})$ nicht genau gleich dem Mittelwert der Gewichte für $\underline{A}1(\nu)$ und $\underline{A}1(\nu + \frac{2\pi}{N})$ bzw. $\underline{A}2(\nu)$ und $\underline{A}2(\nu + \frac{2\pi}{N})$ sind.

Fig. 8 zeigt die geometrische Bedeutung der Bedingungsgleichung (6). Das $\alpha'$,$\beta'$-Koordinatensystem entsteht aus Fig. 2 durch eine Drehung um (n-1).$\pi$/3 und die Vektoren $\underline{A}^*(t)$, $\underline{A}1$ und $\underline{A}2$ können durch Realteile und Imaginärteile in der ($\alpha'+ j.\beta'$)-Ebene dargestellt werden:

$$\underline{A}^*(t) \cdot exp^{- j \cdot \frac{n-1}{3} \pi} = A_\alpha^*(t) + j \cdot A_\beta^* (t)$$

$$\underline{A}_1 \cdot exp \left( - j \cdot \frac{n-1}{3} \cdot \pi \right) = A_{1\alpha} = \frac{2}{3} Ug$$

$$\underline{A}_2 \cdot exp \left( - j \cdot \frac{n-1}{3} \cdot \pi \right) = A_{2\alpha} + j \cdot A_{2\beta} = \frac{2}{3} Ug \cdot exp \left( - j \cdot \frac{\pi}{3} \right)$$

Man kann die Bedingungsgleichung (6) schreiben:

$$\int_T \underline{A}^* \left( t_o + \frac{T}{2} \right) dt = \int_T \underline{u}(t) \, dt$$

Im $\alpha'$, $\beta'$-System werden daraus die beiden Gleichungen

$$\int_{2\pi/N} A_\alpha^* \left( t_o + \frac{T}{2} \right) \cdot d(\omega t) = \int_{\Lambda_1} A_{1\alpha} \cdot d(\omega t) + \int_{\Lambda_2} A_{2\alpha} \cdot d(\omega t)$$

$$\int_{2\pi/N} A_\beta^* \left( t_o + \frac{T}{2} \right) \cdot d(\omega t) = \int_{\Lambda_2} A_{2\beta} \cdot d(\omega t)$$

Bei der Zyklusfolge $\underline{A}1$, $\underline{A}0$, $\underline{A}2$ erzeugen der zunächst aktivierte Zustandsvektor $\underline{A}1$ und nach einer Verweilzeit des Null-Zustandes der Zustandsvektor $\underline{A}2$ eine der Sollkomponenten $A_\alpha^*$ entsprechende Spannungszeitfläche der $\alpha'$-Komponente. Während $\underline{A}1$, $\underline{A}2$ im ortsfesten System konstante $\alpha'$,$\beta'$-Komponenten haben, werden deren Komponenten im rotierenden d', q'-System zu Funktionen A1d(t), A1q(t), A2d(t), A2q(t) (Fig. 8).

Ersichtlich kann hierbei die Reihenfolge im Zyklus vertauscht und auch jeder Zustandsvektor mehrfach angesteuert werden. Z.B. erhält man einen Zyklus $\underline{A}1$, $\underline{A}2$, $\underline{A}0$, $\underline{A}2$, $\underline{A}1$, $\underline{A}0$ mit den Verweildauern T1 und T1' für $\underline{A}1$ bzw. T2 und T2' für $\underline{A}2$ bzw. To und To' für Ao, der die Bedingungsgleichung (6) erfüllt, sobald gilt:

$$\Lambda_1 = T_1 + T_1' = 2\tau \cdot \frac{\pi}{N} \cdot \cos \left( \frac{\pi}{6} + \nu + \frac{\pi}{N} \right)$$

$$\Lambda_2 = T_2 + T_2' = 2\tau \cdot \frac{\pi}{N} \cdot \cos \left( \frac{\pi}{2} - \nu - \frac{\pi}{N} \right)$$

Wird mit n die Zahl der Verweilzeiten (hier: n = 6) bezeichnet und ist die Summe aller Verweilzeiten des Zyklus durch 2$\pi$/$\omega$.N vorgegeben, so stehen also noch (n-3)=3 Freiheitsgrade für die Erfüllung weiterer Bedingungsgleichungen zur Verfügung. Diese zusätzlichen Freiheitsgrade entstehen dadurch, daß in Fig. 5 jeweils zwei Zyklen zu einem neuen Zyklus doppelter Länge zusammengefaßt wurden.

Die Rotation des Sollvektors wird aber besser erfaßt durch die Bedingungsgleichung

$$\frac{1}{T} \int_{t_0}^{t_0+T} \underline{A}^*(t) \cdot dt = \frac{1}{T} \int_{t_0}^{t_0+T} \underline{U}(t) \cdot dt \quad . \tag{8}$$

Gegenüber der Bedingungsgleichung (6) ist also jetzt nicht über den Phasenwinkel, sondern über beide Komponenten des Soll-Vektors gemittelt. Wird unter Berücksichtigung der Normierung die linke Seite dieser Gleichung ins $\alpha',\beta'$-Koordinatensystem der Figuren 4 und 6 transformiert,

$$\frac{1}{T} \int_{t_0}^{t_0+T} \underline{A}^*(t) \cdot dt \longrightarrow \frac{1}{2\pi/N} \cdot \frac{U_d}{T_3} \cdot \int_{\nu}^{\nu+2\pi/N} e^{j\omega t} \cdot d(\omega t),$$

so ergibt nach (2) die rechte Seite von (8) bei entsprechender Transformation:

$$\frac{1}{T} \int_{t_0}^{t_0+T} \underline{U}(t) \cdot dt \longrightarrow \frac{1}{2\pi/N} \cdot \frac{2}{3} U_d \cdot \left\{ \int_{\phi_1} d(\omega t) + \int_{\phi_2} e^{-j\pi/3} \cdot d(\omega t) \right\}$$

Dabei sind $\varphi_1$ und $\varphi_2$ die Teilwinkelbereiche, die sich als Lösungen von (8) anstelle der Lösungen $\Lambda 1$ und $\Lambda 2$ von (6) ergeben:

$$\phi_1 = 2\tau \cdot \sin\frac{\pi}{N} \cdot \cos(\frac{\pi}{6} + (\nu + \frac{\pi}{N})),$$

$$\phi_2 = 2\tau \cdot \sin\frac{\pi}{N} \cdot \cos(\frac{\pi}{2} - (\nu + \frac{\pi}{N})).$$

Die Bedingungsgleichungen (6) und (8) unterscheiden sich also um den Faktor $\varphi 1/\Lambda 1 = \varphi 2/\Lambda 2 = \sin(\pi/N)/(\pi/N)$. Dies ist das Verhältnis der Sehnenlänge zur Bogenlänge und kann vor allem bei niedrigen Taktfrequenzen (kleines N) störend wirken.

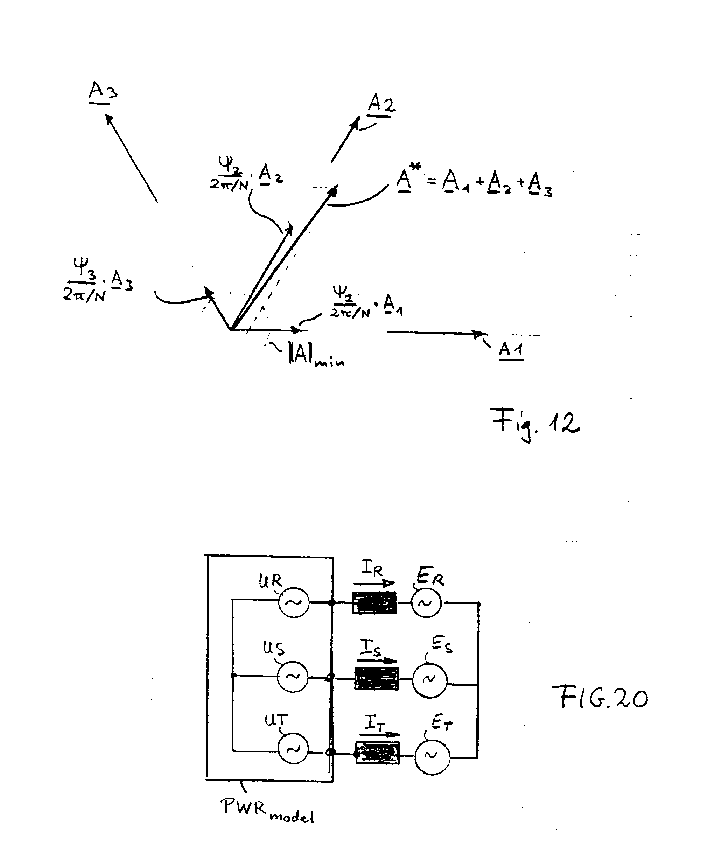

Gegenüber den Figuren 7 und 8 zeigt Fig. 9 die gemäß (8) auftretenden Integrale der zeitabhängigen Sollvektor-Komponenten A*(t) und A*(t) und deren Ortskurve nach Transformation ins rotierende d', q'-Koordinatensystem.

Auch hier kann dies Pulsmuster durch mehrfache Ansteuerung der aktiven Vektoren und durch Vertauschung der Zyklus-Folge variiert werden. Z.B. kann jeder aktive Vektor $\underline{A}1$ und $\underline{A}2$ zweimal angesteuert werden mit

$$T1 + T1' = \varphi 1$$

$$T2 + T2' = \varphi 2.$$

Die Bedingung (8) bedeutet für einen Pulswechselrichter mit eingeprägter Spannung, daß die Mittelwerte des im ruhenden $\alpha,\beta$-System vorausberechneten Istspannungsvektors $\underline{U}(t)$ bzw. dessen auf dieses Koordinatensystem bezogenen Komponenten $U_\alpha(t)$ und $U_\beta(t)$ gleich den entsprechenden Mittelwerten $\frac{1}{T}\int A^*_\alpha(t).dt$ und $\frac{1}{T}\int A^*_\beta.dt$ des Sollspannungsvektors $\underline{A}^*(t)$ gesetzt werden.

Man kann aber auch andere Größen, die von der gepulsten Ausgangsgröße (Spannung) abhängen und daher aus dem momentanen Zustandsvektor vorausberechnet werden können, durch geeignete Bedingungsgleichungen so steuern, daß sie gleich entsprechenden Größen werden, die aus dem Sollvektor entsprechend bestimmt werden.

Sind z.B. die Parameter einer Last bekannt, so ist durch den Spannungssollvektor auch ein Laststrom-

Sollvektor $\underline{I}^*(t)$ bestimmt. Gleichzeitig kann jeweils der Anstieg des Stromes während der Einschaltzeit eines aktiven Spannungsvektors und das Abklingen nach dem Umschalten angegeben werden. Daher kann durch entsprechende Integration über das Zeitintervall T der STrom $\underline{I}(to+T)$ am Ende des Intervalls als Funktion der Verweilzeiten vorausberechnet werden. Hierzu kann vom rotierenden oder vom ruhenden Koordinatensystem ausgegangen werden. Die entsprechende Bedingungsgleichung

$$\underline{I}^*(to + T) \;=\; \underline{I}(to + T)$$

lautet für die Vektorkomponenten:

$$I^*_{\alpha}(to + T) \;=\; I_{\alpha}(to + T); \quad I^*_{\beta}(to + T) \;=\; I_{\beta}(to + T)$$

bzw.

$$I^*_d(to + T) \;=\; I_d(to + T); \quad I^*_q(to + T) \;=\; I_q(to + T)$$

und gestattet, für Zyklen mit fünf oder mehr Verweildauern zwei Freiheitsgrade bei der Berechnung dieser Verweilzeiten zu bestimmen.

Ebenso kann im Intervall T auch die Wirkleistung und/oder Blindleistung auf einen durch die Sollvektoren gegebenen Wert gehalten werden. Dazu müssen die Verweilzeiten aus der komplexen Bedingungsgleichung

$$\int_{t_0}^{t_0+T} \left(\underline{A}^*(t) \cdot \underline{I}^*(t)\right) dt \;=\; \int_{t_0}^{t_0+T} \left(\underline{u}(t) \cdot \underline{I}(t)\right) \cdot dt$$

bzw. deren Realteil und/oder Imaginärteil im ruhenden oder rotierenden Koordinatensystem

$$\int_{t_0}^{t_0+T} A^*_{\alpha}(t) \cdot I^*_{\alpha}(t) \cdot dt \;=\; \int_{t_0}^{t_0+T} \left(u_{\alpha}(t) \cdot I_{\alpha}(t)\right) \cdot dt$$

$$\int_{t_0}^{t_0+T} A^*_{\beta}(t) \cdot I^*_{\beta}(t) \cdot dt \;=\; \int_{t_0}^{t_0+T} \left(u_{\beta}(t) \cdot I_{\beta}(t)\right) \cdot dt$$

bzw.

$$\int_{t_0}^{t_0+T} \left(A^* \cdot I^*_d(t)\right) \cdot dt \;=\; \int_{t_0}^{t_0+T} \left(u_d(t) \cdot I_d(t)\right) \cdot dt$$

$$0 \;=\; \int_{t_0}^{t_0+T} \left(u_q(t) \cdot I_q(t)\right) \cdot dt$$

berechnet werden.

In der Regel wird jedoch vorrangig angestrebt, daß die Phasenlage $\omega.t$ der Grundschwingung, die in der Ausgangsspannung $\underline{U}(t)$ des spannungseinprägenden Umrichters enthalten ist, synchron ist mit dem Sollvektor, d.h. $\omega.to = \varphi^*(to)$ oder nach (5):

$$\omega t \;=\; \varphi^*(t) \;=\; \nu \;+\; \frac{n-1}{3}\cdot\pi \;+\; \omega(t - t_o)$$

Fig. 10 zeigt diesen Sollvektor $A(t)^*$ in einem mit der entsprechenden Rotationsfrequenz rotierenden d,q-Koordinatensystem, das also zu einem Zeitpunkt t gegenüber dem $\alpha,\beta$-System der Fig. 2 um den Winkel

$$\varphi^*(t) \;=\; \nu \;+\; \frac{n-1}{3}\cdot\pi \;+\; \omega(t - t_o) \;=\; \omega t$$

gedreht ist. In diesem Koordinatensystem wird also der Sollvektor $\underline{A}^*(t)$ zu einem Vektor, der in Richtung der d-Achse zeigt und nur durch seinen Betrag, also die reelle Zahl $A^*$ der komplexen Zahlenebene, dargestellt ist. Dagegen werden die aktiven Vektoren $\underline{A}1$ und $\underline{A}2$ zu rotierenden Vektoren, die durch

$$\underline{A}1\cdot\exp(-j\omega t) = \frac{2}{3}\, Ug\cdot\exp\{-j\cdot(\nu + \omega(t - t_o))\}$$

$$\underline{A}2\cdot\exp(-j\omega t) = \frac{2}{3}\, Ug\cdot\exp\{-j\cdot(\nu + \omega(t - t_o))\}$$

gegeben sind. Die Lage dieser Vektoren zu den Zeitpunkten to und to+T ist in Fig. 10 dargestellt. Die Differenz $\underline{A}^*(t)=\underline{U}(t)$ zwischen dem Sollvektor $\underline{A}^*(t)$ und dem vorausberechneten momentanen Zustangsvektor $\underline{U}(t)$ wird

11

also dann im d,q-System

$$(\underline{A}^* - \underline{U}(t)) \cdot \exp(-j\omega t) =$$

$$A^* - \frac{2}{3} Ug \cdot \exp\{-j(\nu + \omega(t - t_o))\} \qquad \text{im Intervall } T_1$$

$$A^* - \frac{2}{3} Ug \cdot \exp\{-j(\nu + \omega(t - t_o))\} \qquad \text{im Intervall } T_2$$

Für die Zyklusfolge $\underline{A}0$, $\underline{A}1$, $\underline{A}2$, $\underline{A}0$ mit den Verweilzeiten T0, T1, T2, T0′ zerfällt z.B. die Bedingungsgleichung (7):

$$\int_{t_o}^{t_o + T} (\underline{A}^* - \underline{u}(t)) \cdot e^{-j \cdot \omega \cdot t} dt = 0$$

also in die beiden Gleichungen:

$$\int_{t_o}^{t_o + T} A^* \cdot dt = \text{Realteil} \left\{ \int_{t_o}^{t_o + T} \underline{u}(t) \cdot e^{-j\omega t} \cdot dt \right\}$$

$$0 = \text{Imaginärteil} \left\{ \int_{t_o}^{t_o + T} \underline{u}(t) \cdot e^{-j\omega t} \cdot dt \right\}$$

oder, nach Einführung der erwähnten Normierung und der Winkel $\nu = \omega.t_o$; $\psi_{o1} = \omega.T_o$; $\psi_1 = \omega.T_1$, $\psi_2 = \omega.T_2$, $\psi_{o2} = \omega.T_o'$:

$$\frac{2\pi}{N} \cdot \tau \cdot \frac{u_d}{\sqrt{3}} = \frac{2}{3} u_g \cdot \left\{ \int_{\nu + \psi_{o1}}^{\nu + \psi_{o1} + \psi_1} \cos(\omega t) \cdot d(\omega t) + \int_{\nu + \psi_{o1} + \psi_1}^{\nu + \frac{2\pi}{N} - \psi_{o2}} \cos\left(\omega t - \frac{\pi}{3}\right) \cdot d(\omega t) \right\}$$

$$0 = -\frac{2}{3} u_g \cdot \left\{ \int_{\nu + \psi_{o1}}^{\nu + \psi_{o1} + \psi_1} \sin(\omega t) \cdot d(\omega t) + \int_{\nu + \psi_{o1} + \psi_1}^{\nu + \frac{2\pi}{N} - \psi_{o2}} \sin\left(\omega t - \frac{\pi}{3}\right) \cdot d(\omega t) \right\}$$

Bezeichnet man mit A1d und A2d die d-Komponenten der aktiven Vektoren $\underline{A}1$ und $\underline{A}2$, die jeweils nur für die Verweildauern T1 und T2 eingeschaltet werden, so ist das Integral der d-Komponente des momentanen Zustandsvektors $\underline{U}(t)$ auf der rechten Seite der Gleichung (10) also gegeben durch die jeweils über die entsprechenden Winkel $\psi_1$ und $\psi_2$ integrierten Komponenten A1d und A2d. Diese Integrale sind in Fig. 11 dargestellt und gleich dem Integral der Sollamplitude A*. Die entsprechenden Integrale der q-Komponenten A1q und A2q von $\underline{A}1$ und $\underline{A}2$ sind in Fig. 11 ebenfalls dargestellt und müssen gleich groß sein, da der Sollvektor $\underline{A}^*(t)$ keine q-Komponente besitzt.

Die Bedingungsgleichung (7) wird eindeutig, wenn man durch willkürliche Zusatzbedingungen, z.B. die Symmetriebedingung $\psi 01 = \psi 02$, die Zahl der Freiheitsgrade, die bei m Verweilzeiten durch (m-1) gegeben ist, auf m = 2 reduziert. Für die hier betrachtete Zyklusfolge $\underline{A}0$, $\underline{A}1$, $\underline{A}2$, $\underline{A}0$ kann z.B. "Symmetrie"

$$\psi o1 = \psi o2$$

gefordert werden. Man erhält dann für die verbleibenden Variablen $\psi 1$, $\psi 2$ und die abhängige Variable $\psi o1 = \frac{1}{2}(\frac{2\pi}{N} - \psi 1 - \psi 2)$ ein nichtlineares Gleichungssystem, das z.B. iterativ gelöst werden kann. In dem betrachteten Fall kann man die Hilfsvariablen

$$\delta = \frac{\psi_1 - \psi_2}{2}; \sigma = \frac{\psi_1 + \psi_2}{2}$$

einführen und erhält durch Umformen von (10) und (11):

$$\sin\delta = \frac{\tau \cdot \sqrt{3}}{N/\pi} \cdot \sin(\nu + \frac{\pi}{N} - \frac{\pi}{6})$$

$$\sin(\sigma + \delta) = -\frac{1}{2} \frac{\sin(\nu + \frac{\pi}{N} - \frac{\pi}{6} - \delta)}{\sin(\nu + \frac{\pi}{N} - \frac{\pi}{6})}$$

Bezeichnet man die Lösungen der Bedingungsgleichung (6) mit $\Lambda1$, $\Lambda2$ und $\Lambda0$, so können diese nach der bekannten Weise ermittelt werden. Es können dann in einem zusätzlichen Rechenschritt die Größen

$$\Sigma = \frac{\Lambda_1 + \Lambda_2}{2} \; ; \; \Delta = \frac{\Lambda_1 - \Lambda_2}{2}$$

ermittelt werden, die über die Beziehungen

$$\sin\delta = \Delta$$
$$\sin(\sigma - \frac{\pi}{6}) = \frac{\sqrt{3}}{2}\Sigma - \frac{1}{2}\sqrt{1 + \Delta^2}$$

bei der Zyklusfolge $\underline{A}0$, $\underline{A}1$, $\underline{A}2$, $\underline{A}0$ und

$$\sin\delta = \Delta$$
$$\sin(\sigma - \frac{\pi}{6}) = \frac{\sqrt{3}}{2}\Sigma - \frac{1}{2}\sqrt{1 - \Delta^2}$$

bei der Zyklusfolge $\underline{A}0$, $\underline{A}2$, $\underline{A}1$, $\underline{A}0$ mit den gesuchten Variablen $\delta$ und $\sigma$ zusammenhängen.

Diese einfachen Gleichungen lassen sich softwaremäßig mit wenig Aufwand im vorhandenen Rechner CALC lösen und führen zu den Schaltwinkeln

$$\psi_1 = (\sigma + \delta) \, , \, \psi_2 = (\sigma - \delta).$$

Geht man von der Lösung $\Lambda1$, $\Lambda2$ der Gleichung (6) aus, die die Raumzeiger-Modulation beschreibt, so kann man entsprechende Hilfsvariable

$$\Delta = \frac{\Lambda_1 - \Lambda_2}{2} \, , \, \Sigma = \frac{\Lambda_1 + \Lambda_2}{2}$$

einführen, für die gilt:

$$\sin\delta = \Delta$$
$$\sin(\sigma - \frac{\pi}{6}) = \frac{\sqrt{3}}{2} \cdot \Sigma - \frac{1}{2}\sqrt{1 - \Delta^2}$$

Die Bedingungen (6) und (7) gehen also nur für $\delta \to 0$ und $\sigma \to 0$ (d.h. $N \to \infty$ oder $\omega \to 0$) ineinander über und können für endliche Werte nicht gleichzeitig mit einer Zyklusfolge erfüllt werden, die nur 2 Freiheitsgrade besitzt.

Für die Bestimmung von $\psi1$ und $\psi2$ kann man also von dem Rechner CALC (Fig. 2) ausgehen, der zunächst $\Lambda1$ und $\Lambda2$ nach der bekannten Raumzeigermodulation bestimmt. Anschließend werden $\Sigma$ und $\Delta$ gebildet und daraus $\sin\delta$ und $\sin(\sigma - \pi/6)$ und dann

$$\psi_1 = \sigma + \delta \, , \, \psi_2 = \sigma - \delta$$

bestimmt.

Die Erfindung ist bevorzugt auf die beiden dem Sollvektor $\underline{A}^*(to)$ benachbarten aktiven Vektoren $\underline{A}1$, $\underline{A}2$ und den Nullvektor gerichtet, aber nicht auf diese Auswahl beschränkt. In Fig. 12 ist eine Zyklusfolge $\underline{A}1$, $\underline{A}2$, $\underline{A}3$ in der Fig. 4 entsprechenden Darstellung gezeigt.

Dabei ist angenommen, daß die Zerlegung von $\underline{A}^*(to)$ bezüglich der beiden aktiven Vektoren $\underline{A}1$ und $\underline{A}2$ eine Verweildauer T2 für $\underline{A}2$ ergeben würde, die unterhalb einer vorgegebenen Mindestdauer $T_{min}$ für einen Schaltzustand liegt. Durch Einführung des weiteren aktiven Vektors

$$\underline{A}_3 = \frac{2}{3} \text{Ug} \cdot e^{j\frac{\pi}{3}}$$

im Winkelbereich $\psi3$ bzw. der entsprechenden Verweildauer $T3 = \frac{1}{\omega} \cdot \psi3$ lassen sich dann z.B. die Verweildauern für die Zyklusfolge $\underline{A}1$, $\underline{A}2$ $\underline{A}3$ finden, die jeweils über $T_{min}$ liegen.

Wie bereits am Beispiel der Bedingungsgleichungen (6) und (7) gezeigt wurde, lassen sich die in den Figuren 8 und 11 dargestellten Verhältnisse nicht gleichzeitig erfüllen, solange $\frac{2\pi}{N} = \omega \cdot T$ nicht sehr klein wird. Andererseits ist durch (7) sichergestellt, daß dem momentanen Zustandsvektor $\underline{U}(t)$ die Grundschwingung eingeprägt wird, auch wenn die Periodendauer T verhältnismäßig groß ist, d.h. mit verhältnismäßig kleiner Modulationsfrequenz gearbeitet wird. Es ist daher möglich, die Zahl m der Verweildauern derart zu erhöhen, daß genügend Freiheitsgrade entstehen, um mehrere der erwähnten unterschiedlichen Bedingungsgleichungen gleichzeitig zu erfüllen. Für eine gegebene Periodendauer $T = \frac{2\pi}{N}$ sind also dann Zyklen mit $m \geqq 5$

Verweildauern erforderlich, um insbesondere die Gleichungen (7) und (8) gleichzeitig lösen zu können.

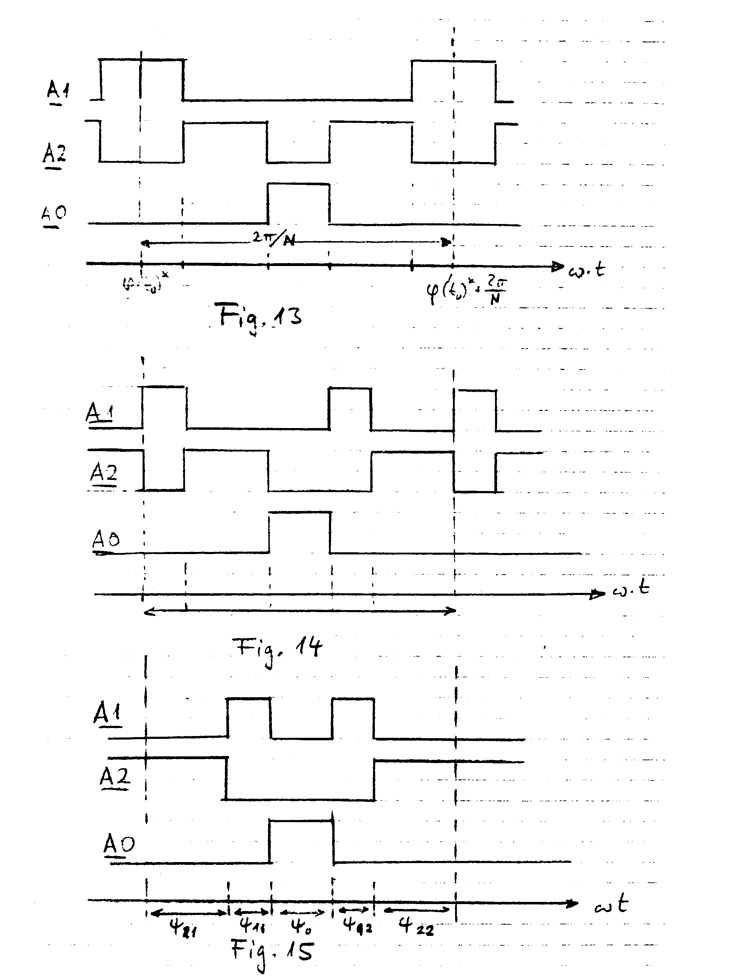

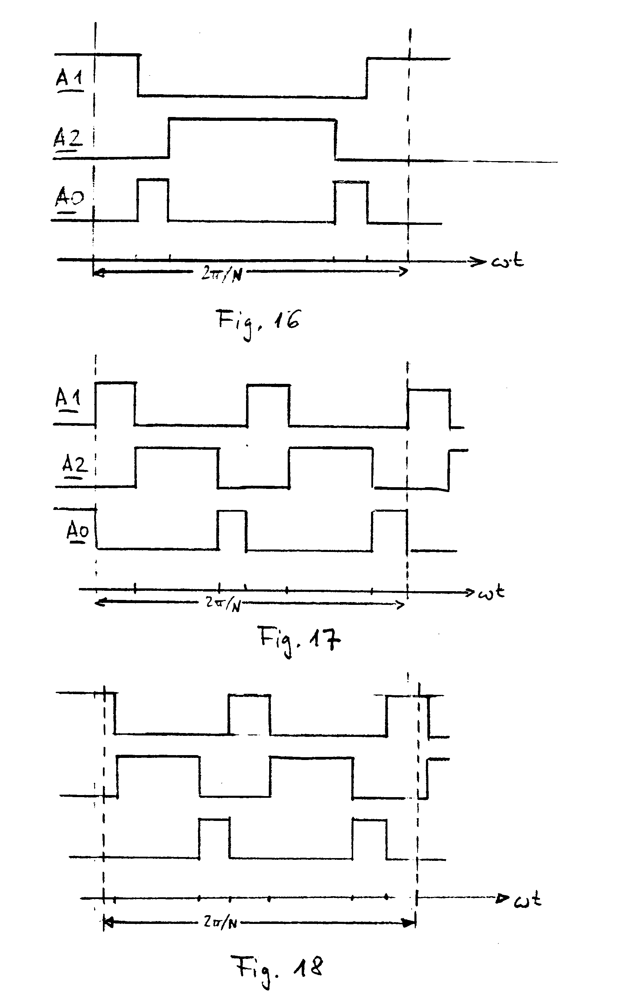

Die Figuren 13 bis 15 zeigen jeweils vorteilhafte Zyklenfolgen, bei denen jeweils die beiden benachbarten aktiven Vektoren $\underline{A}1$ und $\underline{A}2$ zweimal angesteuert werden, um außer den für die Erfüllung von (7) erforderlichen Freiheitsgraden noch zwei weitere Freiheitsgrade für (8), also insgesamt m = 5 Verweildauern zu erhalten. Die gleiche Zahl von Freiheitsgraden besitzt aber auch der Zyklus nach Fig. 16, bei dem der Nullzustand $\underline{A}0$ anstelle des aktiven Vektors $\underline{A}2$ zweimal angesteuert wird.

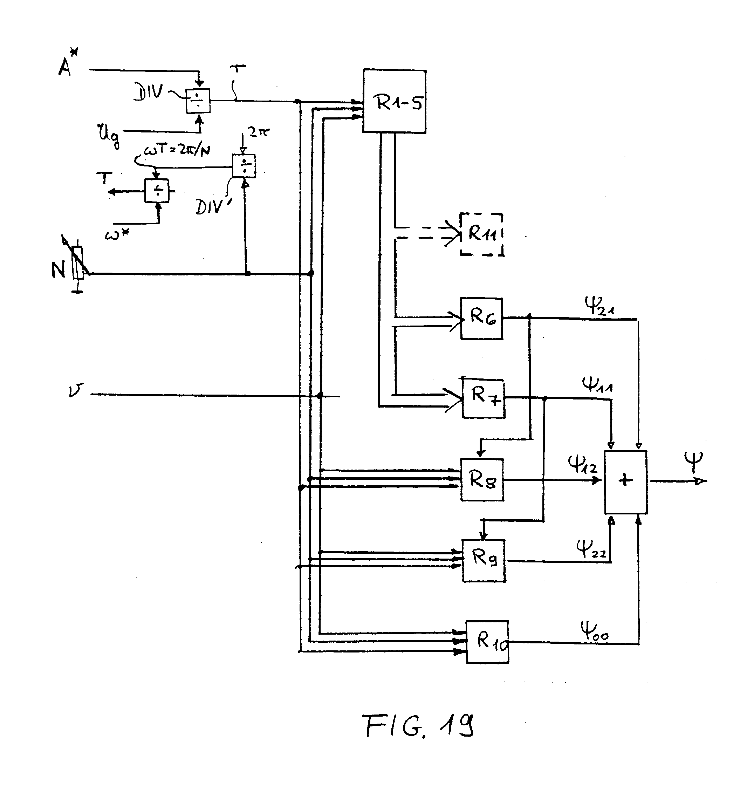

Ist m = 6 erwünscht, so kann dies nach Fig. 17 erreicht werden. Mit der gleichen Zahl von Schaltvorgängen kann gemäß Fig. 18 aber auch m = 7 erreicht werden. In diesem Fall kann also z.B. sowohl die Grundschwingung und die Dritte Harmonische der Spannung $\underline{U}(t)$ eingeprägt wie auch (8) erfüllt werden.

Ist der Zähler Z1 so ausgelegt, daß seine höherwertigen Bit den Winkel $\varphi^*(t) = \omega^* \cdot dt$ als Vielfaches von $\pi/6$ messen, so kann an diesen höherwertigen Bits unmittelbar die Zahl n abgegriffen werden, zu der im Decoder PROM die aktiven Vektoren

$$\underline{A}0 = 0,$$

$$\underline{A}1 = 2.Ug/3.exp(j.n. \pi/3),$$

$$\underline{A}2 = \underline{A}1.exp(j. \pi/3),$$

mit der entsprechenden Reihenfolge $\underline{A}2$, $\underline{A}1$, $\underline{A}0$, $\underline{A}1$, $\underline{A}2$, niedergelegt sind. Zum Zeitpunkt t0 kann am Zähler Z1 der Winkel

$$\nu = \varphi^*(t0) - (n - 1) \cdot {}^{\pi}/3$$

abgegriffen und einem entsprechenden Eingang des Rechners CAL zugeführt werden. Aus dem abgelesenen Amplitudenwert A*(t0) kann mittels eines entsprechenden Dividierers DIV (Fig. 19) der Aussteuergrad r = $\sqrt{3}.A^*/Ug$ gebildet werden. Ferner wird die (nicht notwendigerweise ganzzahlige) Zahl N vorgegeben, die gemäß $\omega.T = 2\pi/N$ die Zyklusdauer T und damit auch die Periode des Zählers Z2 der Fig. 1 vorgibt, wozu in Fig. 19 ein Dividierer DIV' vorgesehen ist. Umgekehrt kann auch von einer vorgegebenen Zyklusdauer T ausgegangen werden, um daraus die Zahl N zu berechnen.

Mit den Eingangsdaten N, $\nu$ und r liegen die Größen fest, aus denen der Rechner CALC die Verweildauern bzw. die zugehörigen Winkel berechnet. Hierzu können vorteilhaft zunächst die Hilfsgrößen E1, E2, B, C und D nach den folgenden Gleichungen (R1) bis (R5) in einem entsprechenden Rechenteil R1-5 berechnet werden:

R1: $\quad E_1 = \sin\pi/N \cdot \cos(\nu - \pi/3 + \pi/N)$

R2: $\quad E_2 = \sin\pi/N \cdot \sin(\nu - \pi/3 + \pi/N)$

R3: $\quad B = \sin(\pi/N - \tau \cdot \sin\pi/N \cdot \cos(\nu + \pi/N - \pi/6))$

R4: $\quad C = \sin (\tau \cdot \sin\pi/N \cdot \sin(\nu + \pi/N) - \pi/N))$

R5: $\quad D = \tau \cdot {}^{\sqrt{3} \cdot \pi}/_{2 \cdot N}$

Ein Rechenteil R6 berechnet dann gemäß

$$R6: \quad \psi_{21} = \arcsin \frac{E_2^2 + C^2 + (E_1 - D)^2 - B^2}{2 \cdot \sqrt{A^2 \cdot C^2 + (A_1 - D)^2 \cdot C^2}} - $$
$$- \arctan \frac{C \cdot (E_1 - D)}{C - E_2} - $$
$$- \nu + \frac{\pi}{6} + \tau \cdot \sin\frac{\pi}{N} \cdot \sin(\nu + \frac{\pi}{N}) - \frac{\pi}{N} - \frac{\pi}{2}$$

die Verweilzeit T21 bzw. den zugehörigen Winkel $\psi$21, der über ein Additionswerk AD als Bezugswert $\varphi$ dem Komparator COMP der Fig. 1 zugeführt wird. Der Decoder PROM wählt dabei die zum aktiven Vektor $\underline{A}2$ gehörende Schaltkombination aus und legt das entsprechende Ansteuersignal solange an seine Ausgänge, bis der Komparator COMP anspricht.

Liegt also z.B. zum Zeitpunkt t0 am Ausgang des Zählers Z1 ein Phasenwinkel $\varphi^*(t0)$ mit $0° \leq \varphi^*(t0) < 60°$ vor, so gilt n = 1 und der Decoder wählt entsprechend dem aktiven Vektor $\underline{A}2 = \underline{U}2$ zunächst den Schaltzustand (++-) aus.

Der Zähler Z2 kann z.B. vom U/F-Umsetzer gesteuert sein und erzeugt daher ein Laufzeitsignal $\omega^* \cdot t$ mit der Periode T=$2 \cdot \pi/(N. \omega^*)$. Zu Beginn der Periode T sind die Schalter T1, T2 und T6 geschlossen. Erreicht das Laufzeitsignal den ersten Bezugswert $\varphi = \psi$21, so wird vom Decoder der Schalter T2 geöffnet und T5 geschlossen. Ein Rechenteil R7 hat unterdessen den zum aktiven Vektor $\underline{A}1 = \underline{U}1$ (Fig. 2: Schaltzustand +--)) und dessen Verweilzeit T11 gehörenden Wert $\psi$11 errechnet:

$$R7: \quad \psi_{11} = \arcsin\left\{\frac{(D+A_1)^2 + A_2^2 - B^2 - C^2}{2\,B\,C}\right\} - \frac{\pi}{6} + \tau \cdot \sin\frac{\pi}{N}\cdot\cos\left(\nu + \frac{\pi}{N} + \frac{\pi}{6}\right),$$

der im Additionswerk AD zum neuen Bezugswert $\varphi = \psi 21+\psi 11$ zusammengesetzt wird. Bei $\omega^*.t = \varphi$ schaltet der Decoder auf den nächsten Schaltzustand der vorgegebenen Zyklusfolge, also z.B. den zu A0 gehörenden Schaltzustand (---), bei dem die Schalter T4, T5 und T6 geschlossen sind. Der Pulswechselrichter verweilt in diesem neuen Schaltzustand bis zum Schaltwinkel $\varphi = \psi 21 + \psi 11 + \psi 00$. In gleicher Weise wird anschließend bis zum Phasenwinkel $\psi 21 + \psi 11 + \psi 00 + \psi 12$ der zu A1 gehörende Schaltzustand (+--) und dann bis zum Ende des Zyklus, d.h. bis zu $\varphi = \psi 21 + \psi 11 + \psi 00 + \psi 22 + \psi 12 = 2\pi/N$ der Schaltzustand (++-) angesteuert. Zum Berechnen der entsprechenden Schaltwinkel dienen mindestens zwei der drei Rechenteile R8, R9, R10:

$$R8: \qquad \psi_{12} = 2\tau\cdot\sin\frac{\pi}{N}\cdot\sin(\frac{\pi}{3} - \nu - \frac{\pi}{N}) - \psi_{21}$$

$$R9: \qquad \psi_{22} = 2\tau\cdot\sin\frac{\pi}{N}\cdot\sin(\nu - \frac{\pi}{N}) - \alpha - \psi_{11}$$

$$R10: \qquad \psi_{oo} = \frac{2\pi}{N} - 2\tau\cdot\sin\frac{\pi}{N}\cdot\cos(\nu + \frac{\pi}{N} - \frac{\pi}{6}).$$

Für N = 24 und $\nu = \pi/36$ ergeben sich dabei z.B.

$\psi_{21} = 0,016\ 824$ , $\qquad \psi_{22} = 0,028\ 377$ ,

$\psi_{11} = 0,079\ 010$ , $\qquad \psi_{12} = 0,074\ 964$ ,

$\psi_{oo} = 0,062\ 623$

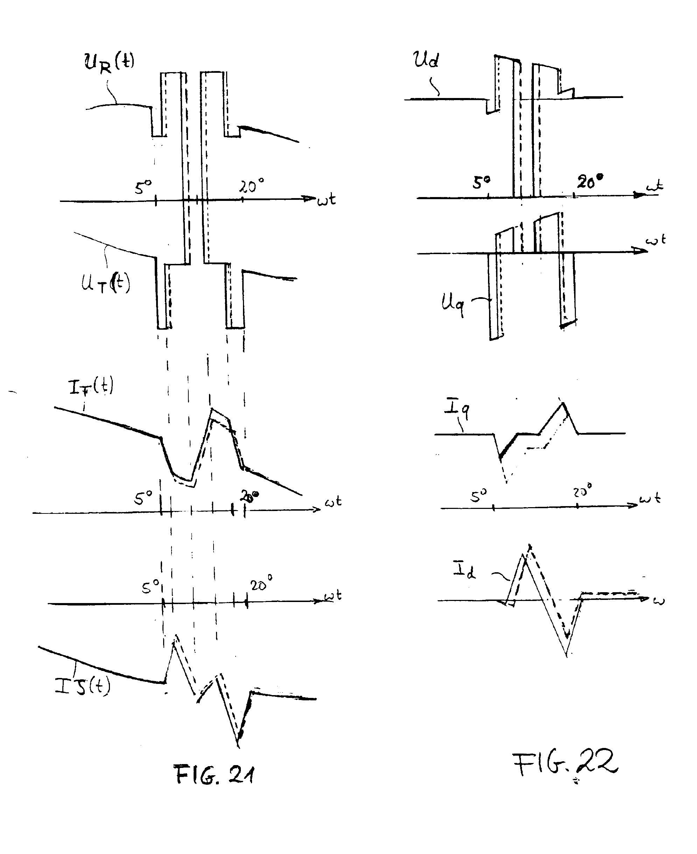

Die Modulationsverfahren wurden an einem Modell (Fig. 20) getestet, bei dem eine dreiphasige Induktivität zwischen sinusförmigen Eingangsspannungen $U_{RST}$ und Gegenspannungen gelegt und dadurch ein sinusförmiger Strom erzeugt wurde. Dann wurde die Eingangsspannung für die Dauer einer Taktperiode durch die Ausgangsspannung eines mit einem sinusförmigen Sollspannungssystem gesteuerten Umrichters mit Gleichspannungszwischenkreis ersetzt.

Bedingungsgleichung (8) sorgt dafür, daß die Spannungszeitflächen der Phasenspannungen in der Periode gleich den Spannungszeitflächen der sinusförmigen Sollspannungen sind. Nach Transformation ins d,q-System ergeben sich allerdings für die Komponenten $U_d(t)$, $U_q(t)$ noch Spannungszeitflächen, die von der durch das Sollspannungssystem vorgegebenen Schwingung abweichen können. Dadurch sind Phasenströme $I_{RST}$ möglich, die innerhalb der Periode einen merklichen Blindstrom-Anteil (Mittelwert der q-Komponente des Stromes) und eine Änderung des Wirkstromes $I_q$ aufweisen.

Die aus Gleichung (8) und der erwähnten Symmetriebedingung folgenden Spannungen und Ströme sind im $\alpha,\beta$-System (Fig. 21) und d,q-System (Fig. 22) mit unterbrochenen Linien dargestellt.

Bedingungsgleichung (7) dagegen sorgt dafür, daß die transformierten Spannungskomponenten und Stromkomponenten (also $U_d(t)$, $I_d(t)$, $U_q(t)$, $I_q(t)$) im Mittel dem gewünschten sinusförmigen Verlauf entsprechen. Jedoch können dabei die Spannungszeitflächen der Phasenspannungen $U_{RST}$ noch von der Sinusform entsprechenden Sollwerten abweichen.

Die erläuterte Kombination der Gleichungen (7) und (8) erzeugt sowohl im $\alpha,\beta$-System als auch im d,q-System geeignete Mittelwerte und ist in Fig. 21 und 22 mit durchgezogenen Linien dargestellt. Diese Figuren sind nicht maßstäblich, um vor allem den an sich geringen Unterschied der nach Gleichung (8) möglichen Wirkstromanteile darzustellen, der aber in Fällen, in denen die Dämpfungswiderstände klein sind, in aufeinander folgenden Perioden noch zu unangenehmen Schwebungen auflaufen kann.

Somit zeigt sich, daß z.B. Schwebungen von Wirk- und Blindleistung auch bei Vorgabe symmetrischer Sollwerte und idealer Schaltelemente des Umrichters bereits durch die bekannten Modulationsverfahren bedingt sind, die Erfindung aber diese systembedingten Fehlsteuerungen zu vermeiden ermöglicht.

## Patentansprüche

1. Verfahren zum Ansteuern der Schaltelemente (T1, ...,T6) eines Wechselrichters (PWR) mit einer gepulsten Ausgangsgröße mit folgenden Merkmalen:

a) Es wird ein Zeitintervall (T) für einen Ansteuerzyklus festgelegt,

b) aus einem Sollvektor ($\underline{A}^*(t)$), dessen Amplitude und Richtung durch Sollwerte ($A^*,\omega^*,\varphi^*$) vorgegeben sind, werden Auswahl und Reihenfolge der während des Zyklus nacheinander anzusteuernden Schaltelemente (T1,...,T6) bestimmt,

c) für die Schaltzustände ($\underline{A}_1,\underline{A}_2$) der Schaltelemente (T1, ...,T6) werden Verweildauern ($T_1,T_2$) errech-

net, und

d) in der bestimmten Reihenfolge werden die einem Schaltzustand ($\underline{A}_1$ bzw. $\underline{A}_2$) entsprechenden Schaltelemente (T1, ...,T6) jeweils solange angesteuert, bis die errechnete Verweildauer ($T_1$ bzw. $T_2$) verstrichen ist und der nächste Schaltzustand ($\underline{A}_2$ bzw. $\underline{A}_1$) angesteuert wird,

**dadurch gekennzeichnet**, daß die Verweildauern ($T_1$, $T_2$) mittels folgenden Bedingungsgleichungen

$$T_1 = \Lambda 1 \,/\, \omega \quad \text{mit} \quad \Lambda 1 = \frac{2\pi r}{N} \cdot \cos\left(\frac{\pi}{6} + \nu + \frac{\pi}{N}\right)$$

$$T_2 = \Lambda 2 \,/\, \omega \quad \text{mit} \quad \Lambda 2 = \frac{2\pi r}{N} \cdot \cos\left(\frac{\pi}{2} - \nu - \frac{\pi}{N}\right) \qquad ,$$

wobei

$\Lambda 1, \Lambda 2$      Teilwinkelbereich
$\omega$      vorgegebene Frequenz
r      Normierung (r = $\sqrt{3} \cdot A^*/U_g$)
N      Sektorzahl
ist,

derart berechnet werden, daß folgende Bedingungsgleichung

$$\int_T (\underline{A}^*(t) - \underline{U}(t)) \cdot e^{-j\omega t} \cdot dt = 0 \quad ,$$

wobei

$\underline{A}^*(t)$      Sollvektor
$\underline{U}(t)$      momentane Zustandsvektor
$\underline{T}$      Zeitintervall
erfüllt wird.

2.    Verfahren nach Anspruch 1, **dadurch gekennzeichnet,** daß die vorgegebene Frequenz aus einer Frequenz des Sollvektors zu Beginn des Zeitintervalls bestimmt wird.

3.    Verfahren nach Anspruch 1, **dadurch gekennzeichnet,** daß Amplitude, Lage und Frequenz des Sollvektors zu Beginn des Zeitintervalls vorgegeben werden und zur Bestimmung des Differenzvektors der Sollvektor für die Dauer des Zeitintervalls durch gleichmäßige Rotation mit der vorgegebenen Frequenz vorausbestimmt wird.

4.    Verfahren nach Anspruch 1, **dadurch gekennzeichnet,** daß als Zeitintervall die Dauer vorgegeben wird, die der Sollvektor zum Durchlaufen eines vorgegebenen Winkelbereiches benötigt.

5.    Verfahren nach Anspruch 4, **dadurch gekennzeichnet,** daß der Winkelbereich zumindest vorübergehend als nicht-ganzzahliger Bruchteil (2 $\cdot \pi$ /N) einer vollen Umdrehung vorgegeben wird.

6.    Verfahren nach Anspruch 4, **dadurch gekennzeichnet,** daß die Lage des Winkelbereichs ($\varphi^*(to)...\varphi^*(to)$ + $\omega^* \cdot T$) in Abhängigkeit von der Lage ($\varphi^*(to) = (n-1) \cdot \pi/3 + \nu$) des Sollvektors zu Beginn des Zeitintervalls vorgegeben wird,
wobei
$\omega^*$      Frequenzsollwert
T      Zeitintervall
$\nu$      Startwinkel
n      Sektorzahl
ist.

7.    Verfahren nach Anspruch 1, **dadurch gekennzeichnet,** daß Auswahl und Reihenfolge der anzusteuernden Schaltelemente bestimmt wird, indem aus der Lage des Sollvektors zu Beginn des Zeitintervalls aus einer Anzahl von diskreten Zustandsvektoren ($\underline{U}0$, $\underline{U}1$,...$\underline{U}6$), die jeweils mindestens einem möglichen

EP 0 533 978 B1

Schaltzustand der Schaltelemente zugeordnet sind, aktive Zustandsvektoren ($\underline{A}$0, $\underline{A}$1, $\underline{A}$2) ausgewählt werden und deren Reihenfolge ($\underline{A}$2, $\underline{A}$1, $\underline{A}$0, $\underline{A}$1, $\underline{A}$2) im Zeitintervall festgelegt wird, und daraus Auswahl und Reihenfolge der anzusteuernden Schaltelemente bestimmt werden.

8. Verfahren nach Anspruch 7, **dadurch gekennzeichnet,** daß für jedes Zeitintervall (T) als einer der aktiven Vektoren ein Nullvektor ($\underline{A}$0), dem ein Wert Null der gepulsten Ausgangsgröße entspricht, ausgewählt wird.

9. Verfahren nach Anspruch 8, **dadurch gekennzeichnet,** daß als zwei weitere aktive Vektoren ($\underline{A}$1, $\underline{A}$2) die dem Sollvektor zu Beginn des Zeitintervalls benachbarten diskreten Zustandsvektoren ausgewählt werden.

10. Verfahren nach Anspruch 1, **dadurch gekennzeichnet,** daß nach einer der Bedingungsgleichungen der über das Zeitintervall gebildete Mittelwert der zum Sollvektor parallelen Komponente ($\underline{U}$d) des momentanen Zustandsvektors gleich der mittleren Amplitude (A*) des Sollvektors und nach einer anderen der Bedingungsgleichung der Mittelwert der zum Sollvektor senkrechten Komponente ($U_q$) des momentanen Zustandsvektors gleich Null ist.

11. Verfahren nach Anspruch 1, **dadurch gekennzeichnet,** daß für einen Zyklus mindestens fünf Verweildauern bestimmt werden, wobei die Summe aller Verweildauern gleich dem Zeitintervall ist.

12. Verfahren nach der Kombination der Ansprüche 10 und 11, **dadurch gekennzeichnet,** daß zur Berechnung der Verweildauern zusätzlich Bedingungsgleichungen verwendet werden, die weitere aus dem momentanen Zustandsvektor abgeleitete Größen gleich vorgegebenen Werten setzen.

13. Verfahren nach Anspruch 12, **dadurch gekennzeichnet,** daß die zusätzlich verwendeten Bedingungsgleichungen aus dem momentanen Zustandsvektor abgeleitete Mittelwerte der Wirkleistung und/oder der Blindleistung gleich entsprechenden, aus dem Sollvektor abgeleiteten Mittelwerten setzen.

14. Verfahren nach Anspruch 12, **dadurch gekennzeichnet,** daß die zusätzlich verwendeten Bedingungsgleichungen eine aus dem momentanen Zustandsvektor durch Integration über das Zeitintervall im ruhenden Koordinatensystem gebildete Größe gleich einem entsprechenden aus dem Sollvektor gebildeten Integral setzen.

15. Verfahren nach Anspruch 12, **dadurch gekennzeichnet,** daß die zusätzlich verwendeten Bedingungsgleichungen eine aus dem momentanen Zustandsvektor durch Integration über das Zeitintervall gebildete vektorielle Größe gleich einer aus dem Sollvektor für das Ende des Zeitintervalls gebildeten vektoriellen Größe setzen.

16. Verfahren nach Anspruch 1, für einen Pulswechselrichter mit eingeprägter Eingangsgleichspannung, **dadurch gekennzeichnet,** daß als Sollvektor ($\underline{A}$*(t)) ein Sollspannungsvektor vorgegeben wird, und daß aus dem Sollspannungsvektor zu Beginn des Zeitintervalls wenigstens drei aktive Vektoren bestimmt werden, die einen möglichen Schaltzustand des Wechselrichters beschreiben und denen wenigstens drei vorausberechnete Verweildauern zugeordnet werden, nach denen jeweils durch Umschalten der Schaltelemente des Wechselrichters von einem aktiven Zustandsvektor auf einen anderen übergegangen wird, wobei die Verweildauern so vorausberechnet werden, daß im Zeitintervall der Mittelwert der zum Sollvektor parallelen Komponente eines Istspannungsvektors, der als momentaner Zustandsvektor die Ausgangsspannung des Wechselrichters beschreibt und als Funktion der Verweildauern vorausberechenbar ist, gleich der gemittelten Amplitude des Sollvektors und der Mittelwert der zum Sollvektor senkrechten Komponente des Istspannungsvektors gleich dem Wert Null ist.

17. Verfahren nach Anspruch 16, **dadurch gekennzeichnet,** daß als aktive Vektoren aus einer Menge von die möglichen Schaltzustände beschreibenden diskreten Vektoren die beiden dem Sollvektor benachbarten diskreten Vektoren und ein einen Zustand mit kurzgeschlossener Ausgangsspannung beschreibender Nullvektor ausgewählt werden.

18. Verfahren nach Anspruch 17, **dadurch gekennzeichnet,** daß m Verweilzeiten so vorgegeben werden, daß die Summe der Verweilzeiten gleich dem Zeitintervall ist und mindestens zwei der aktiven Vektoren im Zyklus zweimal angesteuert werden, und daß die Verweilzeiten so vorausberechnet werden, daß m -

17

3 Nebenbedingungen eingehalten werden, wobei m eine ganze Zahl größer 4 ist.

19. Verfahren nach Anspruch 18, **dadurch gekennzeichnet,** daß zwei Nebenbedingungen Mittelwerte der Wirkleistung und der Blindleistung, die aus dem Istspannungsvektor vorausberechnet werden, im Zeitintervall gleich vorgegebenen Mittelwerten setzen.

20. Verfahren nach Anspruch 18, **dadurch gekennzeichnet**, daß zwei Nebenbedingungen die auf das rotierende Koordinatensystem bezogene Komponenten eines aus dem Istspannungsvektor für das Ende des Zeitintervalls vorausberechneten Stromvektors gleich den entsprechenden Komponenten eines aus dem Sollspannungsvektor vorausberechneten Sollstromvektors setzen.

21. Verfahren nach Anspruch 18, **dadurch gekennzeichnet,** daß zwei Nebenbedingungen die auf das ruhende Koordinatensystem bezogene Komponenten eines aus dem Istspannungsvektor für das Ende des Zeitintervalls vorausberechneten Stromvektors gleich den entsprechenden Komponenten eines Sollstromvektors setzen, die aus dem Sollspannungsvektor vorausberechnet sind.

22. Verfahren nach Anspruch 18, **dadurch gekennzeichnet,** daß zwei Nebenbedingungen, die über das Zeitintervall gebildeten Integrale der auf das rotierende Koordinatensystem bezogenen Komponenten einer aus dem Istspannungsvektor vorausberechneten vektoriellen Größe gleich den entsprechenden Integralen einer aus dem Sollspannungsvektor vorausberechneten vektoriellen Größe setzen.

23. Verfahren nach Anspruch 18, **dadurch gekennzeichnet,** daß zwei Nebenbedingungen die über das Zeitintervall gebildeten Integrale der auf das ruhende Koordinatensystem bezogenen Komponenten einer aus dem Istspannungsvektor vorausberechneten vektoriellen Größe gleich den entsprechenden Integralen einer aus dem Sollspannungsvektor berechneten vektoriellen Größe setzen.

24. Verfahren nach Anspruch 18, **dadurch gekennzeichnet,** daß zwei Nebenbedingungen die Mittelwerte der auf das ruhende Koordinatensystem bezogenen Komponenten des vorausberechneten Istspannungsvektors im Zeitintervall auf entsprechend berechnete Mittelwerte des Sollspannungsvektors setzen.

25. Vorrichtung zur Durchführung des Verfahrens nach einem der Ansprüche 1 bis 24 zum Ansteuern des Schaltelemente eines Pulswechsel richters mit
    a) einer Eingangsstufe (Z1, PROM) zur Eingabe von Sollwerten und zur Bestimmung der Auswahl und Reihenfolge derin einem vorgegebenen Zeitintervall zu betätigenden Schaltelemente,
    b) einer Rechenstufe (CALC) zur Vorausberechnung der Schaltzeitpunkte zum Betätigen der ausgewählten Schaltelemente, und
    c) einer Steuerstufe (Z2, COMP), um zu den vorausberechneten Schaltzeitpunkten entsprechende Steuersignale für die ausgewählten Schaltelemente abzugeben,
    **dadurch gekennzeichnet**, daß die Rechenstufe die Schaltzeitpunkte aus Bedingungsgleichungen derart vorausberechnet, daß im Zeitintervall die als Funktion der Schaltzeitpunkte vorausberechneten Phasenspannungen eines spannungseinprägenden Umrichters oder die als Funktion der Schaltzeitpunkte vorausberechneten Phasenströme eines stromeinprägenden Umrichters einen aus den Sollwerten bestimmten Beitrag zu einer Schwingung vorgegebener Frequenz leisten.

26. Vorrichtung nach Anspruch 25, **dadurch gekennzeichnet,** daß daß die Eingangsstufe eine Reihenfolge festlegt, bei der innerhalb des Zeitintervalls mindestens viermal der Schaltzustand der Schaltelemente geändert wird, und daß der Rechner zur Berechnung der entsprechenden Schaltzeitpunkte zusätzlich mindestens zwei Bedingungsgleichungen benutzt, bei denen über das Zeitintervall gebildete Integrale von Größen, die als Funktionen der Schaltzeitpunkte aus den vorausberechneten Phasenspannungen bzw. Phasenströmen gebildet sind, gleich entsprechenden Integralen von aus den Sollwerten abgeleiteten Größen gesetzt sind.

27. Vorrichtung zur Durchführung des Verfahrens nach einem der Ansprüche 1 bis 24 zum Bilden von Ansteuersignalen für die Schaltelemente eines Pulswechselrichters,
    a) mit Eingängen zur Eingabe von Sollwert-Signalen, die für jeden Zeitpunkt einen momentanen Sollvektor festlegen,
    b) mit Mitteln, um aus den möglichen Schaltzuständen der Schaltelemente diejenigen Schaltzustände auszuwählen, die innerhalb eines Zyklus vorgegebener Dauer in einer vorgegebenen Reihenfolge

EP 0 533 978 B1

nacheinander angesteuert werden sollen,

c) einem Rechenteil, der Verweildauern berechnet, innerhalb derer ein eingesteuerter Schaltzustand beibehalten wird, bevor auf den im Zyklus folgenden Schaltzustand umgeschaltet wird, und

d) mit Mitteln zur Bildung der Ansteuersignale für die den ausgewählten Schaltzuständen entsprechenden und in der vorgegebenen Reihenfolge nacheinander anzusteuernden Schaltelemente,

**dadurch gekennzeichnet,** daß die Vorrichtung nach folgendem Programm gesteuert ist:

Jedem möglichen Zustand der Schaltelemente ist ein diskreter Zustandsvektor zugeordnet, der die gepulste Ausgangsgröße des Wechselrichters als Funktion des Schaltzustandes beschreibt, den für den Zyklus ausgewählten Schaltzuständen der Schaltelemente werden die entsprechenden diskreten Vektoren als aktive Vektoren zugeordnet, entsprechend der Reihenfolge, in der die Schaltzustände an gesteuert werden sollen, werden den aktiven Vektoren Variable zur Vorausberechnung der jeweiligen Verweildauer des anzusteuernden Schaltzustandes zugeordnet, jedem Zeitpunkt innerhalb des Zeitintervalls wird ein als Funktion der Variablen aus den aktiven Vektoren gebildeter momentaner Zustandsvektor mit einer zum Sollvektor parallelen Komponente und einer zum Sollvektor senkrechten Komponente zugeordnet, die Verweilzeiten werden als mathematische Lösungen von mindestens zwei Bedingungsgleichungen gebildet, wobei die eine Bedingungsgleichung den durch Integration über das Zeitintervall gebildeten Mittelwert der zum Sollvektor parallelen Komponente des momentanen Zustandsvektors gleich dem Mittelwert der Amplitude des Sollvektors setzt und die andere Bedingungsgleichung den über das Zeitintervall gebildeten Mittelwert der zum Sollvektor senkrechten Komponente gleich dem Wert Null setzt.

## Claims

1.  A method of driving the switching elements (T1,...,T6) of an inverter (PWR) with a pulsed output variable having the following features:

    a) a time interval (T) is defined for a drive cycle,

    b) from a setpoint vector ($\underline{A}^*(t)$), the amplitude and direction of which are predetermined by setpoint values (A*, ω*, φ*), the selection and sequence of the switching elements (T1,...,T6) to be driven consecutively during the cycle are determined,

    c) for the switching states ($\underline{A}_1,\underline{A}_2$) of the switching elements (T1,..,T6) dwell times ($T_1$, $T_2$) are calculated and

    d) in the specified sequence the switching elements (T1,...,T6) corresponding to a switching state ($\underline{A}_1$ and $\underline{A}_2$) are in each case driven until the calculated dwell time ($T_1$ and $T_2$) has expired and the next switching state ($\underline{A}_2$ and $\underline{A}_1$) is activated,

    characterised in that the dwell times ($T_1$, $T_2$) are calculated by means of the following condition equations:

    $$T_1 = \Lambda 1 / \omega \quad \text{mit} \quad \Lambda 1 = \frac{2\pi r}{N} \cdot \cos\left(\frac{\pi}{6} + v + \frac{\pi}{N}\right)$$

    $$T_2 = \Lambda 2 / \omega \quad \text{mit} \quad \Lambda 2 = \frac{2\pi r}{N} \cdot \cos\left(\frac{\pi}{2} - v - \frac{\pi}{N}\right)$$

    where

    $\Lambda 1, \Lambda 2$      is the partial angle range

    $\omega$      is the given frequency

    r      is the normalization (r = $\sqrt{3} \cdot A^*/U_g$

    N      is the sector number

    in such manner that the following condition equation

    $$\int_T (\underline{A}^*(t) - \underline{U}(t)) \cdot e^{-j\omega t} \cdot dt = 0 \quad ,$$

    where

    $\underline{A}^*(t)$      is the setpoint vector

    $\underline{U}(t)$      is the instantaneous state vector

19

T        is the time interval

is fulfilled.

2.   A method as claimed in Claim 1, characterised in that the given frequency is determined from a frequency of the setpoint vector at the start of the time interval.

3.   A method as claimed in Claim 1, characterised in that the amplitude, position and frequency of the setpoint vector at the start of the time interval are predetermined and in order to determine the difference vector the setpoint vector is predetermined for the duration of the time interval by uniform rotation with the given frequency.

4.   A method as claimed in Claim 1, characterised in that the duration required by the setpoint vector to pass through a given angular range is preset as time interval.

5.   A method as claimed in Claim 4, characterised in that the angular range is at least temporarily preset as a non-integral fraction $(2 \cdot \pi/N)$ of one complete rotation.

6.   A method as claimed in Claim 4, characterised in that the position of the angular range $(\varphi^*(to) \ldots \varphi^*(to) + \omega \cdot T)$ is preset as a function of the position $(\varphi^*(to) = (n-1) \cdot \pi/3 + V)$ of the setpoint vector at the start of the time interval

where

$\omega^*$       is the frequency setpoint value

T         is the time interval

V         is the start angle

n         is the sector number.

7.   A method as claimed in Claim 1, characterised in that the selection and sequence of the switching elements to be driven is determined in that from the position of the setpoint vector at the start of the time interval, from a number of discrete state vectors ($\underline{U}0$, $\underline{U}1$,...$\underline{U}6$) in each case assigned to at least one possible switching state of the switching elements, active state vectors ($\underline{A}0$, $\underline{A}1$, $\underline{A}2$) are selected and their sequence ($\underline{A}2$, $\underline{A}1$, $\underline{A}0$, $\underline{A}1$, $\underline{A}2$) in the time interval is defined and thus the selection and sequence of the switching elements to be driven are determined.

8.   A method as claimed in Claim 7, characterised in that for each time interval (T) a zero vector ($\underline{A}0$), to which a value zero of the pulsed output variable corresponds, is selected as one of the active vectors.

9.   A method as claimed in Claim 8, characterised in that the discrete state vectors adjacent to the setpoint vector at the start of the time interval are selected as two further active vectors ($\underline{A}1$, $\underline{A}2$).

10.   A method as claimed in Claim 1, characterised in that in accordance with one of the condition equations, the mean value, formed over the time interval, of that component ($\underline{U}d$) of the instantaneous state vector parallel to the setpoint vector is equal to the mean amplitude ($A^*$) of the setpoint vector, and in accordance with another of the condition equations the mean value of that component ($U_q$) of the instantaneous state vector perpendicular to the setpoint vector is equal to zero.

11.   A method as claimed in Claim 1, characterised in that at least five dwell times are defined for one cycle, where the sum of all the dwell times is equal to the time interval.

12.   A method as claimed in accordance with the combination of Claims 10 and 11, characterised in that condition equations which equate further variables derived from the instantaneous state vector with predetermined values are additionally used to calculate the dwell times.

13.   A method as claimed in Claim 12, characterised in that the additionally used condition equations equate mean values, derived from the instantaneous state vector, of the active power and/or the reactive power with corresponding mean values derived from the setpoint vector.

14.   A method as claimed in Claim 12, characterised in that the additionally used condition equations equate a variable, formed from the instantaneous state vector by integration over the time interval in the inactive coordinate system, with a corresponding integral formed for the setpoint vector.

15. A method as claimed in Claim 12, characterised in that the additionally used condition equations equate a vectorial variable, formed from the instantaneous state vector by integration over the time interval, with a vectorial variable formed from the setpoint vector for the end of the time interval.

16. A method as claimed in Claim 1 for a pulse inverter with an impressed input d.c. voltage, characterised in that a setpoint voltage vector is preset as setpoint vector ($\underline{A}$*(t)) and that from the setpoint voltage vector at the start of the time interval at least three active vectors are defined, which latter describe a possible switching state of the inverter and which are assigned at least three precalculated dwell times after which, in each case by the switching over of the switching elements of the inverter, a transition is made from one active state vector to another, where the dwell times are precalculated in such manner that in the time interval the mean value of the component, parallel to the setpoint vector, of an actual voltage vector which as instantaneous state vector describes the output voltage of the inverter and can be precalculated as a function of the dwell times, is equal to the averaged amplitude of the setpoint vector, and the mean value of that component of the actual voltage vector perpendicular to the setpoint vector is equal to the value zero.

17. A method as claimed in Claim 16, characterised in that from a quantity of discrete vectors which describe the possible switching states the two discrete vectors adjacent to the setpoint vector and a zero vector which describes a state with short-circuited output voltage are selected as active vectors.

18. A method as claimed in Claim 17, characterised in that m dwell times are preset such that the sum of the dwell times is equal to the time interval and at least two of the active vectors are activated twice in the cycle, and that the dwell times are precalculated such that m-3 secondary conditions are adhered to, where m is a whole number greater than 4.

19. A method as claimed in Claim 18, characterised in that two secondary conditions equate mean values of the active power and the reactive power, which are precalculated from the actual voltage vector, with given mean values in the time interval.

20. A method as claimed in Claim 18, characterised in that two secondary conditions equate the components, relative to the rotating coordinate system, of a current vector precalculated from the actual voltage vector for the end of the time interval with the corresponding components of a setpoint current vector precalculated from the setpoint voltage vector.

21. A method as claimed in Claim 18, characterised in that two secondary conditions equate the components, relative to the inactive coordinate system, of a current vector precalculated from the actual voltage vector for the end of the time interval, with the corresponding components of a setpoint current vector precalculated from the setpoint voltage vector.

22. A method as claimed in Claim 18, characterised in that two secondary conditions equate the integrals, formed over the time interval, of the components, relative to the rotating coordinate system, of a vectorial variable precalculated from the actual voltage vector with the corresponding integrals of a vectorial variable precalculated for the setpoint voltage vector.

23. A method as claimed in Claim 18, characterised in that two secondary conditions equate the integrals, formed over the time interval, of the components, relative to the inactive coordinate system, of a vectorial variable precalculated from the actual voltage vector with the corresponding integrals of a vectorial variable calculated from the setpoint voltage vector.

24. A method as claimed in Claim 18, characterised in that two secondary conditions equate the mean values of the components, relative to the inactive coordinate system, of the precalculated actual voltage vector in the time interval with correspondingly calculated mean values of the setpoint voltage vector.

25. A device for the implementation of the method claimed in one of Claims 1 to 24 for driving the switching elements of a pulse inverter with

a) an input stage (Z1, PROM) for the input of setpoint values and for the determination of the selection and sequence of the switching elements to be actuated in a given time interval,

b) a calculation stage (CALC) for the precalculation of the switching times for the actuation of the selected switching elements and

c) a control stage (Z2, COMP) for the emission, at the precalculated switching times, of corresponding control signals for the selected switching elements,

characterised in that the calculating stage precalculates the switching times from condition equations such that in the time interval the phase voltages of a voltage-impressing inverter, precalculated as a function of the switching times, or the phase currents of a current-impressing inverter, precalculated as a function of the switching times, make a contribution, defined from the setpoint values, to an oscillation of a given frequency.

26. A device as claimed in Claim 25, characterised in that the input stage defines a sequence with which the switching state of the switching elements is changed at least four times within the time interval, and that for the calculation of the corresponding switching times the calculation device additionally uses at least two condition equations with which integrals, formed over the time interval, of variables formed as functions of the switching times from the precalculated phase voltages and phase currents, are equated with corresponding integrals of variables derived from the setpoint values.

27. A device for the implementation of the method claimed in one of claims 1 to 24 for the formation of drive signals for the switching elements of a pulse inverter,

a) with inputs for the input of setpoint value signals which define an instantaneous setpoint vector for each time,

b) with means for selecting, from the possible switching states of the switching elements, those switching states which, within a cycle of a given duration, are to be driven consecutively in a predetermined sequence,

c) with a calculation section which calculates dwell times within which an activated switching state is maintained before a switch-over is made to the switching state which follows in the cycle and

d) with means for the formation of the drive signals for the switching elements which correspond to the selected switching states and are to be driven consecutively in the given sequence,

characterised in that the device is controlled in accordance with the following program: Each possible state of the switching elements is assigned a discrete state vector which describes the pulsed output variable of the inverter as a function of the switching state, the switching states of the switching elements selected for the cycle are assigned the corresponding discrete vectors as active vectors, in accordance with the sequence in which the switching states are to be activated the active vectors are assigned variables for the precalculation of the respective dwell time of the switching sate which is to be activated, each time within the time interval is assigned an instantaneous state vector, formed as a function of the variables from the active vectors, with one component parallel to the setpoint vector and one component perpendicular to the setpoint vector, the dwell times are formed as mathematical solutions of at least two condition equations, where the one condition equation equates the mean value, formed by integration over the time interval, of that component of the instantaneous state vector parallel to the setpoint vector with the mean value of the amplitude of the setpoint vector, and the other condition equation equates the mean value, formed over the time interval, of the component perpendicular to the setpoint vector with the value zero.

**Revendications**

1. Procédé pour commander des éléments de commutation (T1,...,T6) d'un onduleur (PWR) délivrant une grandeur de sortie pulsé, présentant les caractéristiques suivantes :

a) on fixe un intervalle de temps (T) pour un cycle de commande,

b) on détermine le choix et la séquence des éléments de commutation (T1,...,T6) devant être commandés successivement pendant le cycle, à partir d'un vecteur de consigne ($\underline{A}$*(t)), dont l'amplitude et la direction sont prédéterminés par des valeurs de consigne (A*,$\omega$*,$\varphi$*),

c) pour les états de commutation ($\underline{A}_1$,$\underline{A}_2$) des éléments de commutation ($T_1$,...,$T_6$), on détermine des durées de maintien ($T_1$,$T_2$), et

d) les éléments de commutation (T1,...,T6), qui correspondent à l'état de commutation ($\underline{A}_1$ ou $\underline{A}_2$) sont commandés respectivement, selon la séquence déterminée, jusqu'à ce que la durée de maintien calculée ($T_1$ ou $T_2$) soit écoulée et que l'état de commutation immédiatement suivant ($\underline{A}_2$ ou $\underline{A}_1$) soit commandé,

caractérisé par le fait que les durées de maintien ($T_1$,$T_2$) sont calculées au moyen des équations suivantes :

$$T_1 = \Lambda 1/\omega \text{ avec } \Lambda 1 = \frac{2\pi r}{N}\cdot\cos\left(\frac{\pi}{6} + \nu + \frac{\pi}{N}\right)$$

$$T_2 = \Lambda 2/\omega \text{ avec } \Lambda 2 = \frac{2\pi r}{N}\cdot\cos\left(\frac{\pi}{2} - \nu - \frac{\pi}{N}\right)$$

avec

$\Lambda 1, \Lambda 2$     zone angulaire partielle

$\omega$     fréquence prédéterminée

$r$     normalisation ($r = \sqrt{3}.A^*/U_g$)

$N$     nombre de secteurs

de telle sorte que l'équation conditionnelle suivante est satisfaite

$$\int_T (\underline{A^*}(t) - \underline{U}(t)).e^{-j\omega t}.dt = 0 \ ,$$

avec

$\underline{A^*}(t)$     vecteur de consigne

$\underline{U}(t)$     vecteur d'état instantané

$T$     intervalle de temps.

2.    Procédé suivant la revendication 1, caractérisé par le fait que la fréquence prédéterminée est déterminée à partir d'une fréquence du vecteur de consigne au début de l'intervalle de temps.

3.    Procédé suivant la revendication 1, caractérisé par le fait que l'amplitude, la position et la fréquence du vecteur de consigne sont prédéterminées au début de l'intervalle de temps et que pour la détermination du vecteur de différence, le vecteur de consigne est déterminé au préalable pendant la durée de l'intervalle de temps, par rotation au moyen d'une rotation uniforme avec la fréquence prédéterminée.

4.    Procédé suivant la revendication 1, caractérisé par le fait qu'on détermine à l'avance, comme intervalle de temps, la durée qui est nécessaire pour que le vecteur de consigne parcours une plage angulaire prédéterminée.

5.    Procédé suivant la revendication 4, caractérisé par le fait que la plage angulaire est prédéterminée au moins de façon transitoire en tant que fraction non entière ($2.\pi/N$) d'une rotation complète.

6.    Procédé suivant la revendication 4, caractérisé par le fait que la position de la plage angulaire ($\varphi^*(to) \ldots \varphi^*(to) + \omega^*.T$) est prédéterminée en fonction de la position ($\varphi^*(to) = (n-1).\pi/3+\nu$) du vecteur de consigne au début de l'intervalle de temps,

avec

$\omega^*$     valeur de consigne de la fréquence

$T$     intervalle de temps

$\nu$     angle de démarrage

$n$     nombre de secteurs.

7.    Procédé suivant la revendication 1, caractérisé par le fait qu'on détermine la sélection et la séquence des éléments de commutation devant être commandés par le fait qu'à partir de la position du vecteur de consigne, au début de l'intervalle de temps, des vecteurs actifs d'états ($\underline{A}0$, $\underline{A}1$, $\underline{A}2$) sont sélectionnés à partir d'un nombre de vecteurs d'états discrets ($\underline{U}0$, $\underline{U}1,\ldots \underline{U}6$), qui sont associés respectivement au moins à un état de commutation possible des éléments de commutation, et leur succession ($\underline{A}2,\underline{A}1,\underline{A}0,\underline{A}1,\underline{A}2$) est fixée dans l'intervalle de temps et que la sélection et la séquence des éléments de commutation devant être commandés sont déterminées à partir de là.

8.    Procédé suivant la revendication 7, caractérisé par le fait que pour chaque intervalle de temps ($T$), un vecteur nul ($\underline{A}0$), auquel correspond une valeur nulle de la grandeur de sortie pulsée, est sélectionné pour chaque intervalle de temps ($T$).

9.    Procédé suivant la revendication 8, caractérisé par le fait que les vecteurs discrets d'états, qui sont voisins du vecteur de consigne au début de l'intervalle de temps, sont sélectionnés pour constituer deux autres vecteurs actifs ($\underline{A}1$, $\underline{A}2$).

10. Procédé suivant la revendication 1, caractérisé par le fait que selon l'une des équations conditionnelles, la valeur moyenne, formée pendant l'intervalle de temps, de la composante (Ud), parallèle au vecteur de consigne, du vecteur d'état instantané est égale à l'amplitude moyienne (A*) du vecteur de consigne et qu'en fonction d'une autre équation conditionnelle, la valeur moyenne de la composante (Uq) perpendiculaire au vecteur de consigne du vecteur instantané d'état est égale à zéro.

11. Procédé suivant la revendication 1, caractérisé par le fait qu'au moins cinq durées de maintien sont déterminées pour un cycle, la somme de l'ensemble des durées de maintien étant égale à l'intervalle de temps.

12. Procédé suivant la combinaison des revendications 10 et 11, caractérisé par le fait que pour le calcul des durées de maintien, on utilise, en supplément des équations conditionnelles, qui rendent d'autres grandeurs, dérivées du vecteur instantané d'état, égales à des valeurs prédéterminées.

13. Procédé suivant la revendication 12, caractérisé par le fait que les équations conditionnelles utilisées en supplément fixent les valeurs moyennes de la puissance active et/ou de la puissance réactive, dérivées du vecteur instantané d'état, égales à des valeurs moyennes correspondantes dérivées du vecteur de consigne.

14. Procédé suivant la revendication 12, caractérisé par le fait que les équations conditionnelles utilisées en supplément fixent une grandeur formée à partir du vecteur instantané d'état par intégration pendant un intervalle de temps, dans le système de coordonnées fixes, égale à une intégrale correspondante formée à partir du vecteur de consigne.

15. Procédé suivant la revendication 12, caractérisé par le fait que les équations conditionnelles utilisées en supplément fixent une grandeur vectorielle, formée à partir du vecteur instantané d'état par intégration pendant l'intervalle de temps, égale à une grandeur vectorielle formée à partir du vecteur de consigne pour la fin de l'intervalle de temps.

16. Procédé suivant la revendication 1, pour un onduleur à impulsions dans lequel est injectée une tension continue d'entrée, caractérisé par le fait qu'on prédétermine comme valeur de consigne (A*(t)), un vecteur de tension de consigne, et qu'à partir du vecteur de tension de consigne sont déterminés, au début de l'intervalle de temps, au moins trois vecteurs actifs, qui décrivent un état de commutation possible de l'onduleur et auxquels sont associées au moins trois durées de maintien préalablement calculées, au bout desquelles une commutation est effectuée d'un vecteur actif d'état à un autre, respectivement par commutation des éléments de commutation de l'onduleur, les durées de maintien étant préalablement calculées de telle sorte que pendant l'intervalle de temps, la valeur moyenne de la composante, qui est parallèle au vecteur de consigne, d'un vecteur de tension réelle, qui décrit, sous la forme d'un vecteur instantané d'état, la tension de sortie de l'onduleur et peut être préalablement calculé en fonction des durées de maintien, est égale à la moyenne de l'amplitude du vecteur de consigne et que la valeur moyenne de la composante, perpendiculaire au vecteur de consigne, du vecteur de tension réelle, est égale à la valeur zéro.

17. Procédé suivant la revendication 16, caractérisé par le fait qu'on sélectionne, comme vecteurs actifs, parmi une quantité de vecteurs discrets décrivant les états de commutation possibles, les deux vecteurs discrets voisins du vecteur de consigne, et un vecteur nul décrivant un état avec une tension de sortie court-circuitée.

18. Procédé suivant la revendication 17, caractérisé par le fait qu'on prédétermine m durées de maintien, que la somme des durées de maintien est égale à l'intervalle de temps et qu'au moins deux des vecteurs actifs dans le cycle sont commandés deux fois et que les durées de maintien sont préalablement calculées de telle sorte que m-3 conditions secondaires sont respectées, m étant un nombre entier supérieur à 4.

19. Procédé suivant la revendication 18, caractérisé par le fait que deux conditions secondaires fixent des valeurs moyennes de la puissance active et de la puissance réactive, qui sont préalablement calculées à partir du vecteur de tension réelle, pendant l'intervalle de temps, égales à des valeurs moyennes prédéterminées.

20. Procédé suivant la revendication 18, caractérisé par le fait que deux conditions secondaires fixent les composantes, rapportées au système de coordonnées tournant, d'un vecteur de courant préalablement calculé à partir du vecteur de tension réelle pour la fin de l'intervalle de temps, égales aux composantes correspondantes d'un vecteur de courant de consigne préalablement calculé à partir du vecteur de tension de consigne.

21. Procédé suivant la revendication 18, caractérisé par le fait que deux conditions secondaires fixent les composantes, rapportées au système de coordonnées fixes, d'un vecteur de courant préalablement calculé à partir du vecteur de tension réelle pour la fin de l'intervalle de temps, égales aux composantes correspondantes d'un vecteur de courant de consigne, qui sont préalablement calculées à partir du vecteur de la tension de consigne.

22. Procédé suivant la revendication 18, caractérisé par le fait que deux conditions secondaires fixent l'intégrale, formée pendant l'intervalle de temps, des composantes, rapportées au système de coordonnées rotatives, d'une grandeur vectorielle préalablement calculée à partir du vecteur de la tension réelle, égale à l'intégrale correspondante d'une grandeur vectorielle préalablement calculée à partir du vecteur de la tension de consigne.

23. Procédé suivant la revendication 18, caractérisé par le fait que deux conditions secondaires fixent l'intégrale, formée par l'intervalle de temps, des composantes rapportées au système de coordonnées fixes, d'une grandeur vectorielle, préalablement calculée à partir du vecteur de la tension réelle, par l'intégrale correspondante d'une grandeur vectorielle calculée à partir du vecteur de la tension de consigne.

24. Procédé suivant la revendication 18, caractérisé par le fait que deux conditions secondaires fixent les valeurs moyennes des composantes, rapportées au système de coordonnées fixes, du vecteur de la tension réelle préalablement calculé, pendant l'intervalle de temps, à des valeurs moyennes calculées de façon correspondante du vecteur de la tension de consigne.

25. Dispositif pour la mise en oeuvre du procédé suivant l'une quelconque des revendications 1 à 24, pour la commande des éléments de commutation d'un onduleur à impulsions, comportant
    a) un étage d'entrée (Z1, PROM) pour l'introduction de valeurs de consigne et la détermination de la sélection et de la série des éléments de commutation devant être actionnés pendant l'intervalle de temps prédéterminé,
    b) un étage de calcul (CALC) pour le calcul préalable des instants de commutation pour l'actionnement des éléments de commutation sélectionnés, et
    c) un étage de commande (Z2, COMP) pour délivrer, aux instants de commutation préalablement calculés, des signaux de commande correspondants pour les éléments de commutation sélectionnés,
    caractérisé par le fait que l'étage de calcul exécute le calcul préalable des instants de commutation à partir des équations conditionnelles de telle sorte que, pendant l'intervalle de temps, les tensions de phase, préalablement calculées en fonction des instants de commutation, d'un mutateur, qui injecte la tension, ou les courants de phase, préalablement calculés en fonction des instants de commutation, d'un mutateur qui injecte un courant, apportent une contribution, qui est déterminée à partir des valeurs de consigne, à une oscillation avec une fréquence prédéterminée.

26. Dispositif suivant la revendication 25, caractérisé par le fait que l'étage d'entrée fixe une séquence, selon laquelle l'état de commutation des éléments de commutation est modifié au moins quatre fois pendant l'intervalle de temps, et que pour le calcul des instants de commutation correspondants, le calculateur utilise, en supplément, au moins deux équations conditionnelles, conformément auxquelles des intégrales formées pendant un premier intervalle de temps, de grandeurs, qui sont formées en fonction des instants de commutation à partir des tensions de phase ou des courants de phase préalablement calculés, sont rendues égales à des intégrales correspondantes de grandeurs dérivées des valeurs de consigne.

27. Dispositif pour la mise en oeuvre du procédé suivant l'une des revendications 1 à 24 pour la formation de signaux de commande pour les éléments de commutation d'un onduleur à impulsions, comportant
    a) des entrées pour introduire les signaux de valeurs de consigne, qui fixent à chaque instant un vecteur instantané de consigne,
    b) des moyens pour sélectionner, parmi les états de commutation possibles des éléments de commutation, les états de commutation, qui doivent être commandés successivement au cours d'un cycle d'une durée prédéterminée, selon une séquence prédéterminée,
    c) une partie de calcul, qui calcule des durées de maintien, pendant lesquelles un état de commutation commandé est maintenu avant qu'une commutation soit effectuée sur l'état de commutation suivant dans le cycle, et

d) des moyens pour former les signaux de commande pour les éléments de commutation, qui correspondent aux états de commutation sélectionnés et doivent être commandés successivement selon la séquence prédéterminée, caractérisé par le fait que le dispositif est commandé selon le programme suivant : à chaque état possible des éléments de commutation est associé un vecteur d'état discret, qui décrit la grandeur de sortie pulsée de l'onduleur en fonction de l'état de commutation, les vecteurs discrets correspondants sont associés, en tant que vecteurs actifs, aux états de commutation sélectionnés pour le cycle, des éléments de commutation, et des variables pour le calcul préalable de la durée de maintien respective de l'état de commutation devant être commandé sont associés aux vecteurs actifs, en fonction de la séquence, avec laquelle les états de commutation doivent être commandés, un vecteur instantané d'état, formé en fonction des variables à partir du vecteur actif et comportant une composante parallèle au vecteur de consigne et une composante perpendiculaire au vecteur de consigne est associé à chaque instant à l'intérieur de l'intervalle de temps, les temps de séjour sont formés sous la forme de solutions mathématiques d'au moins deux équations conditionnelles, auquel cas une équation conditionnelle rend la valeur moyenne, formée par intégration pendant l'intervalle de temps, de la composante, parallèle au vecteur de consigne, du vecteur instantané d'état, égale à la valeur moyenne de l'amplitude du vecteur de consigne et l'autre équation conditionnelle rend la valeur de consigne, formée pendant l'intervalle de temps, de la composante perpendiculaire au vecteur de consigne, égale à la valeur zéro.

Fig. 1

Fig. 2

Fig. 4

$$US^* = A^* \cdot \cos\left(\varphi^*(t_0) - \frac{2\pi}{3}\right)$$

"0"

$$UR^* = A^* \cos \varphi^*(t_0)$$

$$UT^* = A^* \cos\left(\varphi^*(t_0) - \frac{4\pi}{3}\right)$$

Fig. 3

FIG. 5

FIG. 6

Fig. 7

Fig. 10

31

$$\int_{\frac{2\pi}{N}} A_{\alpha}^{*} .. = \int_{\Lambda_1} A1\alpha., + \int_{\Lambda_2} A2\alpha..$$

$$\int_{\frac{2\pi}{N}} A_{\beta}^{*} \cdot d(\omega t) = \int_{\Lambda_2} A2\beta\, d(\omega t)$$

FIG. 8

FIG. 9

FIG. 11

$$\underline{A}_3$$

$$\underline{A}_2$$

$$\frac{\Psi_2}{2\pi/N}\cdot\underline{A}_2$$

$$\underline{A}^* = \underline{A}_1 + \underline{A}_2 + \underline{A}_3$$

$$\frac{\Psi_3}{2\pi/N}\cdot\underline{A}_3$$

$$\frac{\Psi_2}{2\pi/N}\cdot\underline{A}_1$$

$$|A|_{min}$$

$$\underline{A}1$$

Fig. 12

$I_R$   $E_R$

$U_R$

$U_S$   $I_S$   $E_S$

$U_T$   $I_T$   $E_T$

FIG.20

$PWR_{model}$

Fig. 13

Fig. 14

Fig. 15

Fig. 16

Fig. 17

Fig. 18

FIG. 19

FIG. 21

FIG. 22